# EUROPEAN PATENT APPLICATION

(11) **EP 3 065 453 A1**
(43) Date of publication of application: **07.09.2016**
(21) Application number: 14857932.9
(22) Date of filing: 17.10.2014
(51) Int. Cl.: H04W 28/04, H04W 72/04

(54) **USER TERMINAL, BASE STATION, AND WIRELESS COMMUNICATION METHOD**

(30) Priority: 31.10.2013 JP 2013226623
(71) Applicant: NTT DOCOMO, INC., Chiyoda-ku Tokyo 100-6150 (JP)
(72) Inventor: TAKEDA, Kazuki, Tokyo 100-6150 (JP); JIANG, Huiling, Beijing 100190 (CN); LIU, Liu, Beijing 100190 (CN); MU, Qin, Beijing 100190 (CN)
(74) Representative: Hoffmann Eitle
(86) International application number: PCT/JP2014/077639
(87) International publication number: WO 2015/064377

(57) **Abstract**

The present invention is designed so that uplink transmission is carried out adequately even when CA is executed by employing different duplex modes between multiple cells. A user terminal communicates with an FDD cell and a TDD cell that employ carrier aggregation, and has a receiving section that receives DL signals transmitted from each cell, a decision section that detects the DL signals received, and makes retransmission control decisions, and a feedback control section that allocates and feeds back delivery acknowledgement signals in response to each DL signal in a predetermined UL subframe, and, when aggregating and allocating delivery acknowledgement signals for the DL signal of each cell in an uplink control channel in a UL subframe of the TDD cell, the feedback control section employs a feedback mechanism which makes it possible to allocate the delivery acknowledgement signals to all DL subframes of the FDD cell, and the decision section detects DL signals assuming that the number of DL subframes of the FDD cell to be allocated to a UL subframe of the TDD cell does not exceed predetermined value.

## Description

### Technical Field

The present invention relates to a user terminal, a base station and a radio communication method that are applicable to a next-generation communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

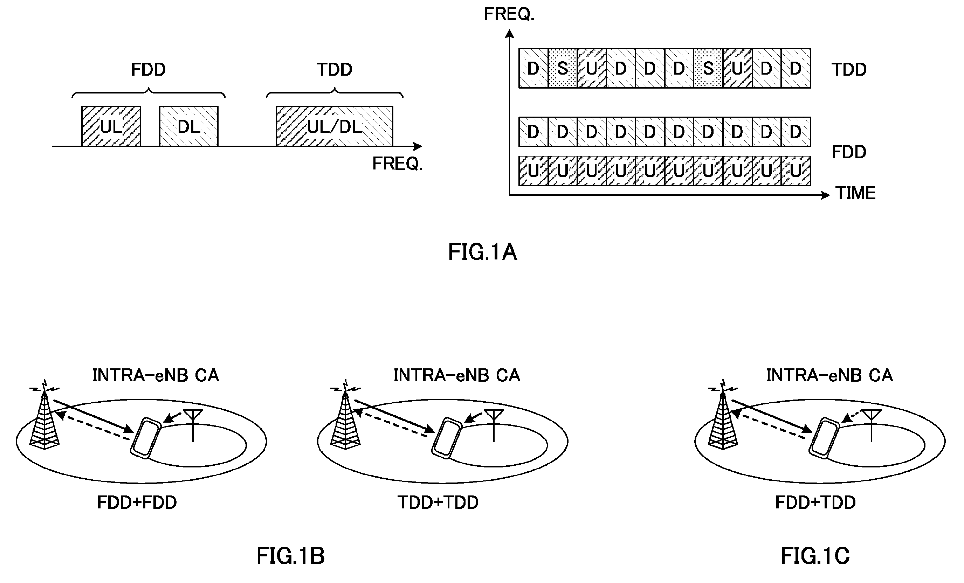

As duplex modes for radio communication in the LTE and LTE-A systems, there are frequency division duplex (FDD) to divide between the uplink (UL) and the downlink (DL) based on frequency, and time division duplex (TDD) to divide between the uplink and the downlink based on time (see FIG. 1A). In the event of TDD, the same frequency region is employed in both uplink and downlink communication, and signals are transmitted and received to and from one transmitting/receiving point by dividing between the uplink and the downlink based on time.

Also, the system band of the LTE-A system (Rel. 10/11) includes at least one component carrier (CC), where the system band of the LTE system constitutes one unit. Gathering a plurality of component carriers (cells) to achieve a wide band is referred to as "carrier aggregation" (CA).

### Citation List

### Non-Patent Literature

Non-Patent Literature 1: 3GPP TS 36.300 "Evolved UTRA and Evolved UTRAN Overall Description"

### Summary of Invention

### Technical Problem

In carrier aggregation (CA), which was introduced in Rel. 10/11, the duplex mode to employ between a plurality of CCs (also referred to as "cells," "transmitting/receiving points," etc.) is limited to the same duplex mode (see FIG. 1B). On the other hand, future radio communication systems (for example, Rel. 12 and later versions) may anticipate CA to employ different duplex modes (TDD +FDD) between multiple CCs (see FIG. 1C).

Also, Rel. 10/11 anticipates intra-base station CA (intra-eNB CA), which controls CA by using one scheduler between multiple CCs. In this case, PUCCH signals (delivery acknowledgement signals (ACKs/NACKs), etc.) that are transmitted in each CC in response to DL data signals (PDSCH signals) are multiplexed on a specific CC (primary cell (PCell) and transmitted.

When a conventional feedback mechanism is used in CA in which different duplex modes (TDD +FDD) are employed between multiple CCs, there is a risk that delivery acknowledgement signals and so on cannot be transmitted adequately on the uplink.

The present invention has been made in view of the above, and it is therefore an object of the present invention to provide a user terminal, a base station and a radio communication method, whereby uplink transmission can be carried out adequately even when CA is executed by applying different duplex modes between multiple cells.

### Solution to Problem

A user terminal according to the present invention provides a user terminal that communicates with an FDD cell and a TDD cell that employ carrier aggregation, and that has a receiving section that receives DL signals transmitted from each cell, a decision section that detects the DL signals received, and makes retransmission control decisions, and a feedback control section that allocates and feeds back delivery acknowledgement signals in response to each DL signal in a predetermined UL subframe, and, in this user terminal, when aggregating and allocating delivery acknowledgement signals for the DL signal of each cell in an uplink control channel in a UL subframe of the TDD cell, the feedback control section employs a feedback mechanism which makes it possible to allocate the delivery acknowledgement signals to all DL subframes of the FDD cell, and the decision section detects DL signals assuming that the number of DL subframes of the FDD cell to be allocated to a UL subframe of the TDD cell does not exceed predetermined value.

### Advantageous Effects of Invention

According to the present invention, it is possible to carry out uplink transmission adequately even when CA is executed by applying different duplex modes between multiple cells.

### Brief Description of Drawings

FIGs. 1 provide diagrams to explain an overview of duplex modes in LTE and LTE-A, and intra-base station CA (intra-eNB CA);
FIGs. 2 provide diagrams to explain the DL HARQ timings (uplink A/N feedback timings) in FDD and TDD;
FIGs. 3 provide diagrams to explain an example of A/N feedback timings in TDD-FDD CA (method 1);
FIGs. 4 provide diagrams to explain another example of A/N feedback timings in TDD-FDD CA (method 2 and method 3);
FIGs. 5 provide diagrams to explain an example of new HARQ timings in TDD-FDD CA (method 3);
FIGs. 6 provide diagrams to explain another example where new HARQ timings are applied in TDD-FDD CA (two CCs) (method 3);
FIGs. 7 provide diagrams to explain another example where new HARQ timings are applied in TDD-FDD CA (two CCs) (method 3);
FIGs. 8 provide diagrams to explain an example of HARQ timings according to a first example;
FIGs. 9 provide diagrams to explain another example of HARQ timings according to the first example;
FIGs. 10 provide diagrams to explain another example of HARQ timings using DAI, according to the first example;
FIG. 11 is a diagram to explain an example case (case 1) where new HARQ timings are applied in TDD-FDD CA (five CCs) (method 3);
FIG. 12 is a diagram to explain another example case (case 2) where new HARQ timings are applied in TDD-FDD CA (five CCs) (method 3);
FIG. 13 is a diagram to explain another example case (case 3) where new HARQ timings are applied in TDD-FDD CA (five CCs) (method 3);
FIG. 14 is a diagram to explain another example case (case 4) where new HARQ timings are applied in TDD-FDD CA (five CCs) (method 3);
FIG. 15 is a diagram to explain an example case (case 1) where new HARQ timings are applied according to a second example (method 3);
FIG. 16 is a diagram to explain another example case (case 2) where new HARQ timings are applied according to the second example (method 3);
FIG. 17 is a diagram to explain another example case (case 3) where new HARQ timings are applied according to the second example (method 3);
FIG. 18 is a diagram to explain another example case (case 4) where new HARQ timings are applied according to the second example (method 3);
FIG. 19 is a diagram to explain another example case where new HARQ timings are applied according to the second example (method 3);
FIG. 20 is a diagram to explain another example case where new HARQ timings are applied according to the second example (method 3);
FIG. 21 is a diagram to explain an example case where new HARQ timings are controlled on a per user terminal and/or CC basis according to the second example (method 3);
FIG. 22 is a schematic diagram to show an example of a radio communication system according to the present embodiment;
FIG. 23 is a diagram to explain an overall structure of a radio base station according to the present embodiment;
FIG. 24 is a diagram to explain a functional structure of a radio base station according to the present embodiment;
FIG. 25 is a diagram to explain an overall structure of a user terminal according to the present embodiment; and
FIG. 26 is a diagram to explain a functional structure of a user terminal according to the present embodiment.

### Description of Embodiments

As noted earlier, in the LTE and LTE-A systems, two duplex modes -- namely, FDD and TDD -- are stipulated (see above FIG. 1A). Also, from Rel. 10 onward, support for intra-base station CA (intra-eNB CA) has been provided. However, CA in Rel. 10/11 is limited to the use of the same duplex mode (FDD +FDD intra-eNB CA, or TDD +TDD intra-eNB CA) (see above FIG. 1 B).

Meanwhile, the systems of Rel. 12 and later versions presume intra-base station CA (intra-eNB CA) that employs different duplex modes (TDD +FDD) between multiple CCs (see above FIG. 1C). In intra-base station CA (intra-eNB CA), scheduling is controlled using one scheduler between multiple cells. That is, a user terminal has only to feed back uplink control signals (UCI) such as delivery acknowledgement signals (ACKs/NACKs (hereinafter also referred to as "A/N's")) and/or the like, to a specific cell (primary cell (PCell)) alone.

Meanwhile, when CA is executed by applying different duplex modes between multiple CCs (cells) (TDD-FDD CA), the problem is how a user terminal should feed back A/N's. For example, it may be possible that, in TDD-FDD CA, each cell employs the conventional feedback mechanism on an as-is basis.

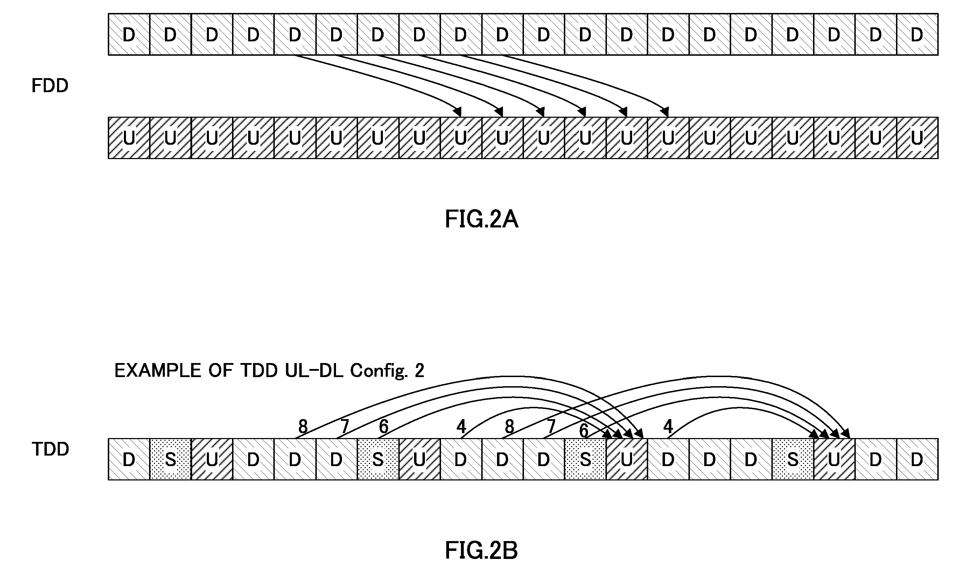

FIG. 2A shows a case where, in a cell in which FDD is employed (hereinafter also referred to as an "FDD cell"), a user terminal feeds back A/N's in response to PDSCH signals in conventional timings. In this case, the user terminal feeds back the A/N's in UL subframes that come a predetermined number of subframes (for example, 4 ms) after the DL subframes where the PDSCH signal is allocated.

FIG. 2B shows a case where, in a cell in which TDD is employed (hereinafter also referred to as a "TDD cell"), a user terminal feeds back A/N's in response to PDSCH signals in conventional timings. In this case, the user terminal feeds back the A/N's in UL subframes that are assigned (associated) in advance to the DL subframes where the PDSCH signal is allocated.

In TDD in Rel. 10, the configuration ratio of UL and DL is stipulated in a plurality of patterns (DL/UL configurations 0 to 6), and, in each DL/UL configuration, the DL subframes to be allocated to UL subframes are determined. For example, FIG. 2B shows the case of the DL/UL configuration 2 (DL/UL Config. 2), in which each DL subframe is allocated to (associated with) a predetermined UL subframe. In FIG. 2B, the number that is assigned to each DL subframe (including special subframes) shows the number of subframe to go back from the corresponding UL subframe.

In Rel. 10, the A/N feedback timings (DL HARQ timings) are the same when CA is employed (see FIG. 1 B) and when CA is not employed. In Rel. 11, CA to use multiple TDD cells of varying UL/DL configuration ratios was introduced. In this case, the A/N feedback timings to use were the same as in one of the seven patterns of UL/DL configuration ratios (DL/UL configurations 0 to 6) of existing TDD were used. That is, in existing systems, A/N feedback timings stipulated in FDD were used in FDD CA, and one pattern of A/N feedback timings stipulated in TDD was used in TDD CA. However, even when CA is applied to UL, A/N transmission using the PUCCH is stipulated to be carried out only in a specific cell (PCell).

In this way, in conventional systems, different PUCCH mechanisms are stipulated between FDD and TDD, and therefore what PUCCH transmission method should be used when CA (TDD-FDD CA) is executed by applying different duplex modes between multiple cells (multiple CCs) poses the problem.

For example, assume a case where, in TDD-FDD CA, the TDD cell is configured to be the PCell (and the FDD cell is configured to be a secondary cell (SCell)), and where A/N feedback and so on are sent by using only the PUCCH of the PCel1. That is, the user terminal aggregates A/N's in response to DL signals of the TDD cell and A/N's in response to DL signals of the FDD cell, in the PUCCH of a UL subframe of the TDD cell. As for the A/N feedback timings (HARQ timings) in this case, the present inventors are studying the following three methods.

### <Method 1>

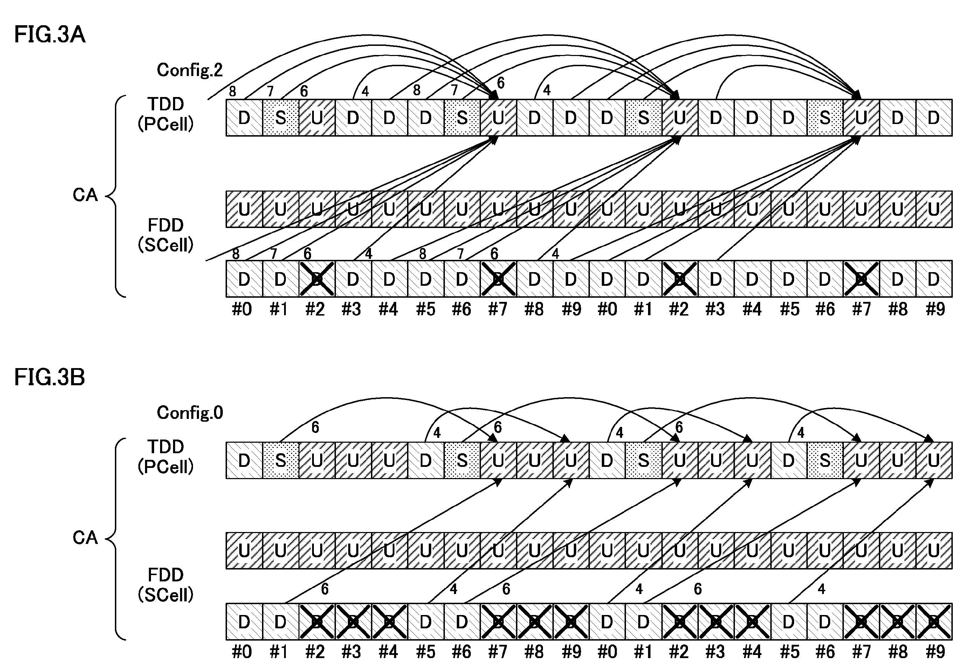

FIG. 3A shows a case where A/N feedback for the FDD cell, which is configured as an SCell, is sent in the same feedback timings as provided in the DL/UL configuration of the TDD cell (PCell) (method 1). To be more specific, FIG. 3A shows a case where, when CA is carried out between a TDD cell (PCell) employing the DL/UL configuration 2 (Config2) and an FDD cell (SCell), A/N feedbacks for the TDD cell and the FDD cell are sent in the feedback timings of the DL/UL configuration 2 of TDD.

In this case, a user terminal can identify the subframes (the TDD cell's UL subframes) to feed back A/N's in response to DL signals transmitted in the FDD cell, without having these specified from the radio base station. By this means, it is not necessary to report new signaling to the user terminal, and, furthermore, it is possible to re-use the mechanism of existing systems. Furthermore, since DL scheduling and the accompanying A/N feedback timings are always the same between the TDD cell and the FDD cell, the base stations can execute scheduling without considering variations in feedback delays between the cells, and it becomes possible to build a scheduler with simple algorithms.

Meanwhile, when the feedback method of method 1 is used, it becomes difficult to feed back all the A/N's in response to DL signals transmitted in DL subframes of the FDD cell, which is configured as an SCell. For example, it is not possible to feed back A/N's in response to DL signals transmitted in the FDD cell's DL subframes that come in the same timings as the TDD cell's UL subframes in the time domain (SFs #2 and #7 in FIG. 3A). In particular, when the TDD cell (PCell) employs a DL/UL configuration (for example, Config0) in which the proportion of UL subframe is large, method 1 places a significant limitation on the allocation of the FDD cell's DL subframes to the TDD cell's UL subframes (see FIG. 3B). As a result of this, the number of DL subframes that can have A/N feedback among the FDD cell's DL subframes decreases. Since it is not possible to apply scheduling to DL subframes where A/N feedback is not provided, this results in a problem of a significant decrease in the efficiency of the use of DL resources.

### <Method 2>

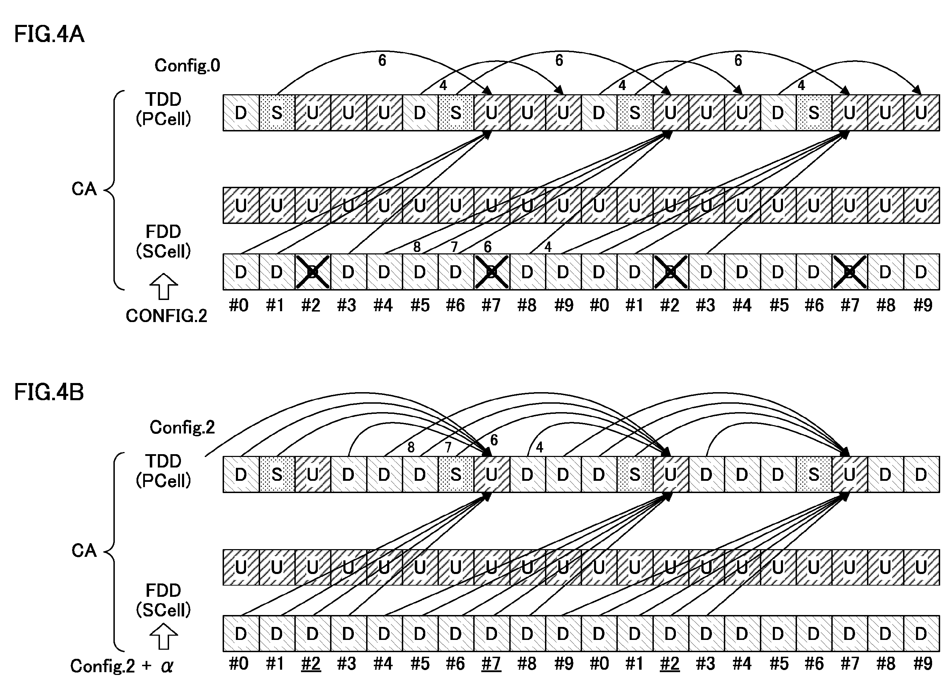

FIG. 4A shows a case where A/N's for the FDD cell (SCell) are controlled in accordance with the feedback timing of another TDD DL/UL configuration, instead of following the feedback timing of the TDD DL/UL configuration that is configured in the PCell (method 2). Note that the TDD DL/UL configuration which the FDD cell employs for feedback timings will be referred to as the "reference DL/UL configuration" ("TDD reference DL/UL configuration").

FIG. 4A shows a case where the TDD cell (PCell) employs the A/N feedback timings of the DL/UL configuration 0 and the FDD cell (SCell) employs the DL/UL configuration 2 as the reference DL/UL configuration. In this case, even when the TDD cell (PCell) employs a DL/UL configuration in which the proportion of UL subframes is large (for example, Config0), it is possible to reduce the limitations on the allocation of the FDD cell's DL subframes to the TDD cell's UL subframes. Note that the reference DL/UL configuration which the FDD cell employs may be configured by a higher layer and so on in TDD-FDD CA terminals, or may be determined in advance depending on the DL/UL configuration ratio in the TDD cell (PCell), and so on.

In this way, by applying a reference DL/UL configuration to the FDD cell, it becomes possible to control the A/N feedback timings in the FDD cell, in a flexible manner, regardless of the TDD cell's DL/UL configuration. However, even in the case illustrated in FIG. 4A, again, A/N feedback is not configured in subframes that are directed to UL in the reference DL/UL configuration (SFs #2 and #7 in FIG. 4A), and therefore DL scheduling is not possible with these subframes. In the seven reference DL/UL configurations for existing TDD, the proportion of UL is 10% to 60%, disabling DL allocation by the same proportion.

### <Method 3>

FIG. 4B shows a feedback method (feedback mechanism), by which, in TDD-FDD CA (in which the PCell employs TDD), A/N's in response to all the DL subframes of the FDD cell can be allocated to the TDD cell's UL subframes (method 3). In FIG. 4B, the TDD cell (PCell) employs the A/N feedback timings of the DL/UL configuration 2, and the FDD cell (SCell) employs feedback timings which are based on the DL/UL configuration 2 (reference) and which make it possible to allocate the A/N's of all DL subframes of the FDD cell (DL/UL configuration 2+α).

That is, A/N feedback is sent even for subframes that are directed to UL in the DL/UL configuration 2 (SFs #2 and #7 of the FDD cell in FIG. 4B). Note that the feedback destination of the A/N's of these subframes (SFs #2 and #7) may be, for example, the same feedback destination as that of neighboring subframes. Note that, although the method 3 shown in FIG. 4B illustrates a case where a DL/UL configuration is used as a base for the FDD cell's A/N feedback timings, the present embodiment is by no means limited to this. Any feedback mechanism may be applicable as long as A/N's for DL subframes of the FDD cell can be allocated.

In this way, in TDD-FDD CA, a study is in progress by the present inventors to alleviate the limitations of A/N feedback (allocation to DL subframes) with respect to the FDD cell that is configured as an SCell, and, furthermore, in order to make the A/N feedback timings flexible, define new A/N feedback timings (A/N feedback mechanism).

By virtue of the new A/N feedback mechanism (new HARQ timings) shown in the method 3, even when, in TDD-FDD CA, the TDD cell is configured as the PCell, and A/N transmission is carried out by using only the PUCCH of the PCell, it becomes possible to send A/N feedback to meet all the DL signals transmitted in the FDD cell's DL subframes. By this means, the base stations can control the allocation of DL data signals (PDSCH signals) flexibly in comparison to method 1 and method 2.

Meanwhile, cases might occur where A/N's in response to all the DL subframes of the FDD cell that are aggregated and fed back in predetermined UL subframes of the TDD cell exceed the number of bits that can be transmitted in the PUCCH formats for existing systems. In this case, there is a threat of making user terminals unable to carry out A/N feedback adequately. Now, the PUCCH formats that can be used with the present embodiment will be described below.

### <PUCCH formats>

In conventional systems, a plurality of formats (PUCCH formats) are stipulated for the PUCCH transmission of uplink control signals such as delivery acknowledgement signals (A/N signals), channel quality information (CQI) and so on.

When CA is not employed in an FDD cell (non-CA), the A/N's that are fed back from each user terminal in one subframe are one or two bits. In this case, the user terminals employ PUCCH format 1a/1b and feed back one or two A/N bits by using BPSK or QPSK (by applying BPSK or QPSK modulation).

When CA (two CCs) is employed in an FDD cell, the A/N's that are fed back from each user terminal in one subframe require maximum four bits. In this case, the user terminals can employ channel selection that is based on PUCCH format 1b ("PUCCH format 1b with channel selection") and transmit maximum four A/N bits.

In PUCCH format 1b with channel selection (hereinafter also referred to simply as "channel selection"), maximum four A/N bits are represented by using plurality of PUCCH resource candidates and QPSK symbols. The user terminals select and feed back predetermined PUCCH resources/QPSK symbol points depending on the content of each cell's A/N.

Also, when CA with 3 or more CCs is employed in an FDD cell, the A/N's that are fed back from each user terminal in one subframe require maximum ten bits (in the event of five CCs). In this case, the user terminals can employ PUCCH format 3 and transmit maximum ten A/N bits.

In TDD, A/N's in response to each of a plurality of DL subframe are allocated in one UL subframe, so that more than two bits of A/N feedback is required even when CA is not employed (non-CA). Consequently, TDD supports A/N bundling, in which A/N's for a plurality of DL subframes are grouped and processed as one A/N. Also, in TDD, even when CA is not employed, it is possible to configure above-mentioned PUCCH format 1b with channel selection, PUCCH format 3 and so on.

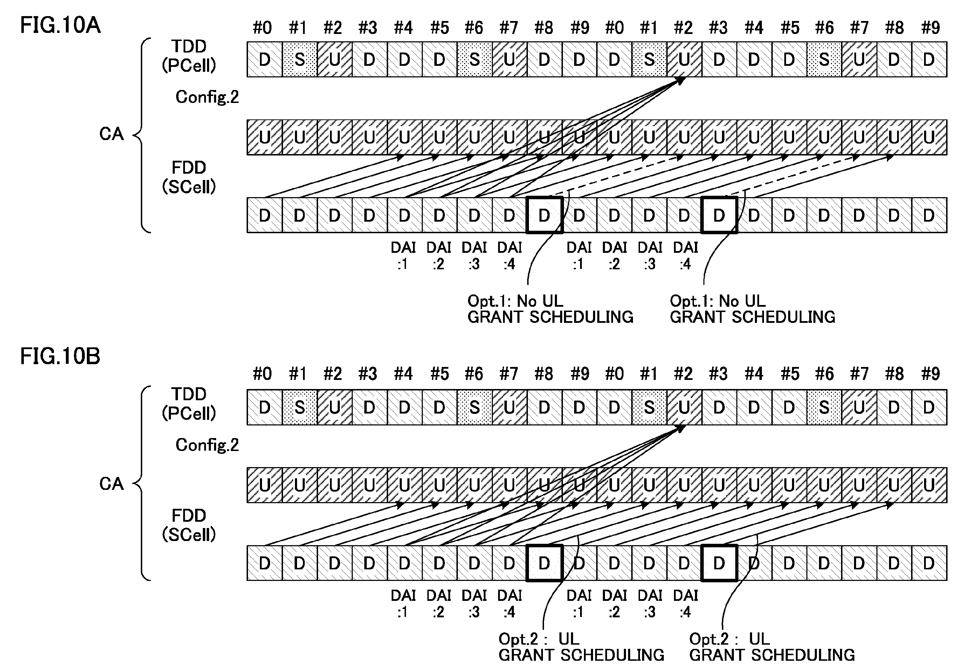

Also, in TDD, in each CC, A/N's for a plurality of DL subframes are transmitted in one UL. Consequently, when CA (two CCs) is employed in a TDD cell, cases might occur where more than four bits of A/N's are multiplexed in one UL subframe. For example, when, in TDD, CA (two CCs) is executed in the DL/UL configuration 2, the A/N's to feed back in one UL become maximum sixteen bits (4 subframes × 2 CWs × two CCs) (see FIG. 10A). As mentioned earlier, when there are more than four bits, TDD in existing systems supports employing A/N spatial bundling and making A/N's for two CWs a one-bit A/N.

By employing spatial bundling of A/N's, a user terminal can feed back maximum eight A/N bits (=16/2) in one UL subframe. Furthermore, in PUCCH format 1b with channel selection in TDD, the above maximum eight A/N bits are converted into four bits as in FDD, by using a code sequence (RM code input bits). By so doing, it is possible to provide support for feeding back more A/N bits.

Meanwhile, when CA with three or more CCs is employed in an FDD cell, the A/N's that are fed back from each user terminal in one subframe require maximum twenty bits (in the event of five CCs). Consequently, existing PUCCH format 3 in the TDD cell supports A/N feedback of maximum twenty bits.

In this way, when two-CC CA is carried out in a TDD cell, a user terminal can feed back maximum eight bits of A/N's (for example, four bits per cell) by employing PUCCH format 1b with channel selection. Also, when CA with three or more CCs (for example, five CCs) is carried out, a user terminal can feed back maximum twenty bits of A/N's (for example, four bits per cell) by employing PUCCH format 3.

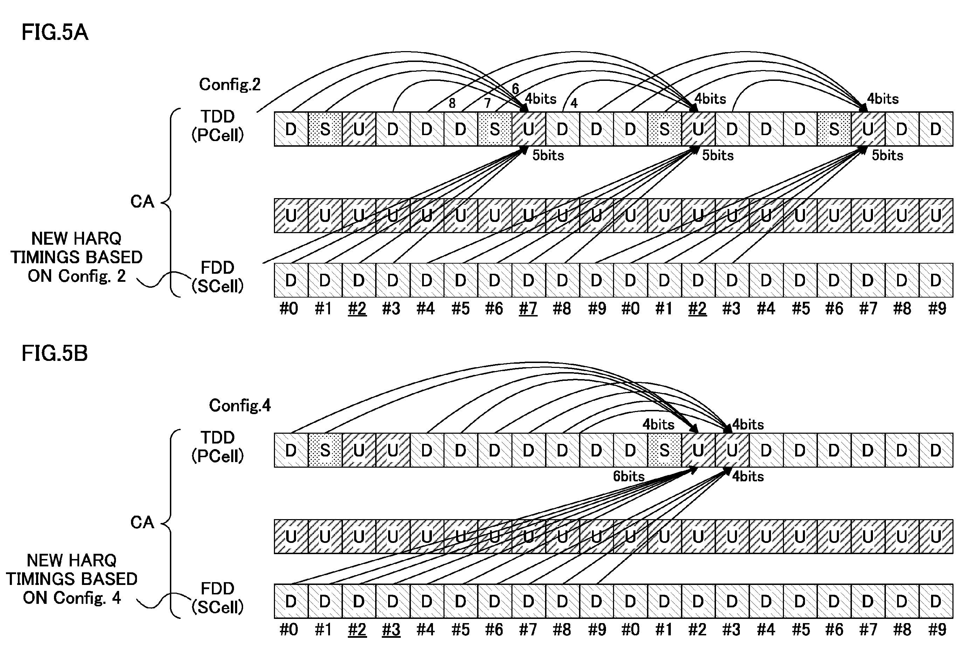

On the other hand, as mentioned earlier, when new HARQ timings (the above method 3) are employed in TDD-FDD CA, there is a threat the number of A/N bits to be allocated to a UL subframe exceeds the number of bits that can be supported in existing PUCCH formats. For example, when new HARQ timings (the above method 3) are employed in TDD-FDD CA (two CCs), as shown in FIGs. 5, the total number of bits of a plurality of A/N's for the FDD cell that are multiplexed on a UL subframe of the TDD cell becomes greater than a predetermined value (for example, four bits). As a result of this, a user terminal becomes unable to send A/N feedback by employing channel selection.

Note that FIG. 5A shows a case where the TDD cell (PCell) employs the A/N feedback timings of the DL/UL configuration 2 and the FDD cell (SCell) employs DL/UL configuration 2-based new HARQ timings (the above method 3). Also, FIG. 5B shows a case where the TDD cell (PCell) employs the A/N feedback timings of the DL/UL configuration 4, the FDD cell (SCell) employs DL/UL configuration 4-based new HARQ timings (the above method 3).

Also, when new HARQ timings (the above method 3) are employed in TDD-FDD CA (3 CCs or more), if more than four bits (for example, five bits) of A/N's from one FDD cell are multiplexed in a UL subframe of the TDD cell, the total becomes greater than more than twenty bits. In this case, a user terminal becomes unable to send A/N feedback by employing PUCCH format 3.

In this way, the present inventors have found out that if, in TDD-FDD CA, the TDD cell is configured as the PCell (and the FDD cell is configured as an SCell) and each cell's A/N is aggregated and allocated in the PCell's PUCCH, cases might occur where existing PUCCH formats become inapplicable when a new A/N feedback mechanism (the above method 3) is employed.

So, assuming that, in TDD-FDD CA, A/N's for multiple CCs (TDD cell and FDD cell) are aggregated, allocated and fed back in a UL subframe of the TDD cell, the present inventors have come up with the idea of employing a new A/N feedback mechanism, and, furthermore, controlling the allocation of A/N's depending on the number of A/N bits to multiplex in the PUCCH of a UL subframe of the TDD cell. To be more specific, even when the new A/N feedback mechanism makes the number of DL subframes of the FDD cell that can be allocated to a specific TDD UL subframe greater than a predetermined value, the present inventors have found out controlling the scheduling of DL signals for each DL subframe of the FDD cell, and, furthermore, allowing effective DL signal detection on the user terminal side.

In TDD-FDD CA (in which the PCell employs TDD), it becomes possible to allocate all the DL subframes of the FDD cell to UL subframes of the TDD cell by employing new HARQ timings (the above method 3). Furthermore, even when new HARQ timings are employed, it is still possible to employ existing PUCCH formats by limiting the allocation of DL data signals in part of the DL subframes of the SCell depending on the number of A/N bits to be multiplexed in a UL subframe of the TDD cell.

Now, specific A/N feedback control according to the present embodiment will be described below in detail with reference to the accompanying drawings. Note that, in the following description, cases that are based on the DL/UL configuration 2 or the DL/UL configuration 4 will be described as examples of new HARQ timing for use by the FDD cell, the new HARQ timings applicable to the present embodiment are by no means limited to these. Also, the present embodiment is by no means limited to intra-base station CA (TDD-FDD CA), and is equally applicable to inter-base station CA (TDD-FDD CA), in which schedulers are provided separately for each of multiple cells and scheduling is controlled in each cell separately.

### (First Example)

An A/N feedback method for up to two CCs in TDD-FDD CA will be described with a first example. Note that a case will be described with the following description where the TDD cell is configured as the PCell (and the FDD cell is configured as an SCell), and A/N's for multiple CCs (TDD cell and FDD cell) are aggregated, allocated and sent by way of PUCCH transmission in an uplink control channel in a UL subframe of the TDD cell. Furthermore, a case will be described here where a user terminal employs new HARQ timings (the above method 3). Note that, when A/N's are fed back at the same time with uplink data (PUSCH signal), the A/N's may be multiplexed in the PUSCH and fed back on a per cell basis.

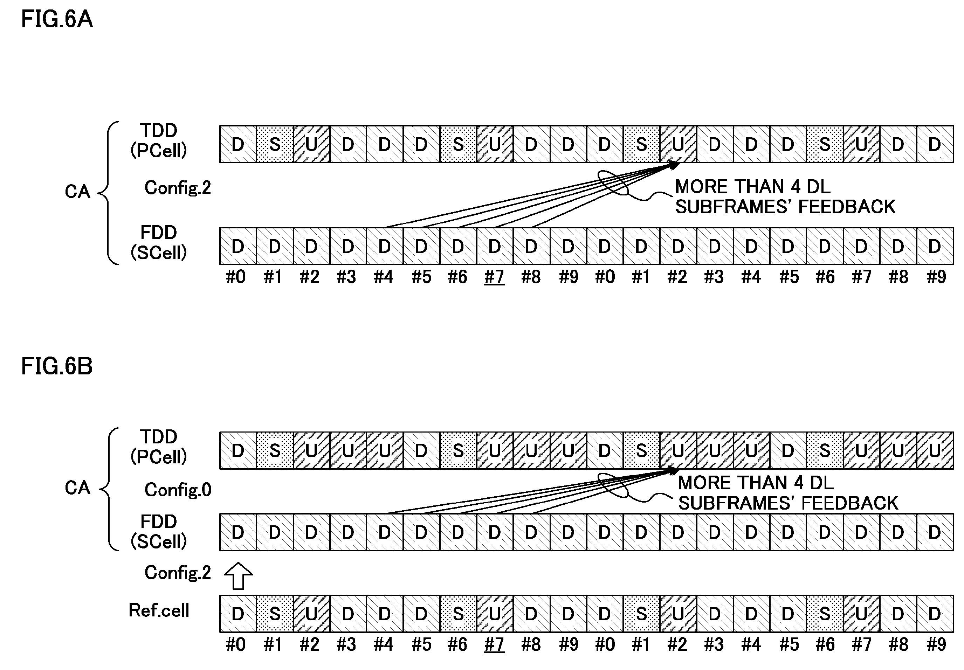

FIG. 6A shows a case where, in CA between a TDD cell (PCell) employing the DL/UL configuration 2 and an FDD cell (SCell), a new HARQ timing that is based on the DL/UL configuration 2, which is employed in the TDD cell, is applied to the FDD cell. FIG. 6B shows a case where, in CA between a TDD cell (PCell) to employ the DL/UL configuration 0 and an FDD cell (SCell), a new HARQ timing that is based on the DL/UL configuration 2, which is different from the DL/UL configuration of the TDD cell, is applied to the FDD cell. Note that, in FIGs. 6, the FDD cell's UL subframes are omitted.

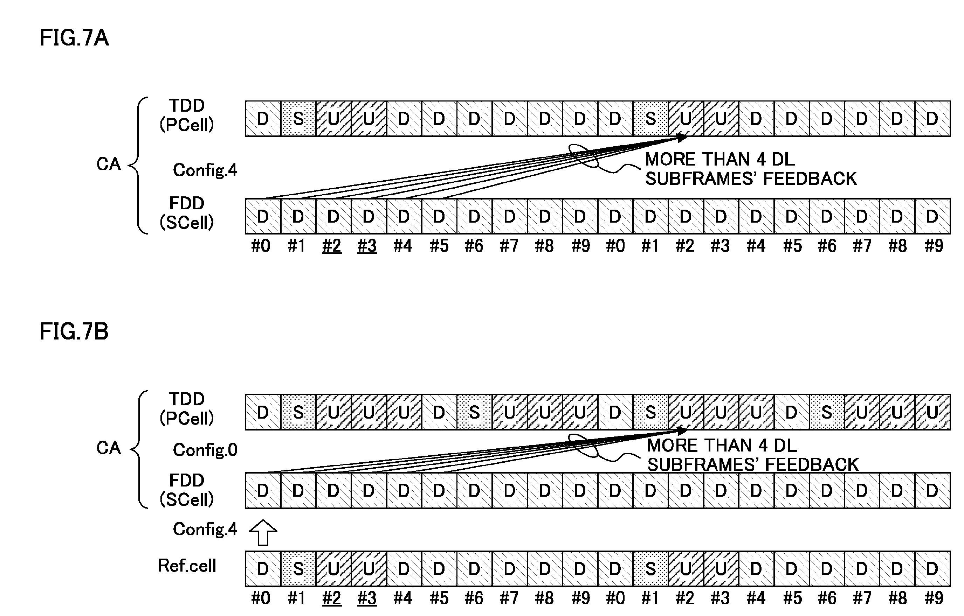

Also, FIG. 7A shows a case where, in CA between a TDD cell (PCell) to employ the DL/UL configuration 4 and an FDD cell (SCell), new HARQ timing that is based on the DL/UL configuration 4, which is employed in the TDD cell, is applied to the FDD cell. FIG. 7B shows a case where, in CA between a TDD cell (PCell) to employ the DL/UL configuration 0 and an FDD cell (SCell), a new HARQ timing that is based on the DL/UL configuration 4, which is different from the DL/UL configuration of the TDD cell, is applied to the FDD cell.

In the cases illustrated in FIG. 6A and 6B, the number of DL subframes of the FDD cell to be allocated to an uplink control channel in a specific UL subframe (SF #2) of the TDD cell exceeds a predetermined value (for example, four). As a result of this, the FDD A/N's to be multiplexed in an uplink control channel in a specific UL subframe (SF #2) of the TDD cell exceed a predetermined value (for example, four bits). In this case, it becomes not possible to employ PUCCH format 1b with channel selection.

Similarly, in the case illustrated in FIG. 7A and 7B, the A/N's for a plurality of DL subframes of the FDD cell to be multiplexed in a specific UL subframe (SF #2) of the TDD cell exceed a predetermined value (for example, four bits). In this case, it becomes not possible to employ PUCCH format 1b with channel selection.

Consequently, with the present embodiment, A/N's are allocated so that the number of A/N bits to be allocated to a UL subframe of the TDD cell does not exceed a predetermined value. To be more specific, a user terminal allocates A/N's so that the number of A/N bits to multiplex in an uplink control channel in a UL subframe of the TDD cell becomes a predetermined value or less.

For example, when the new HARQ timing makes the number of DL subframes of the FDD cell that can be allocated to a specific TDD UL subframe greater than a predetermined value, the allocation of DL signals (DL data signals, DL assignments, etc.) to part of the DL subframes among the FDD cell's DL subframes that can be allocated to this specific TDD UL subframe is limited. Here, the predetermined value may be made the maximum number of bits (the number of subframes) that can be allocated to the TDD cell's UL subframe. For example, considering the four A/N bits of DL subframes in the TDD cell, the scheduling of the FDD cell's DL signals is controlled so that the number of A/N bits to multiplex from the FDD cell becomes four or less (the number of DL subframes is four or less).

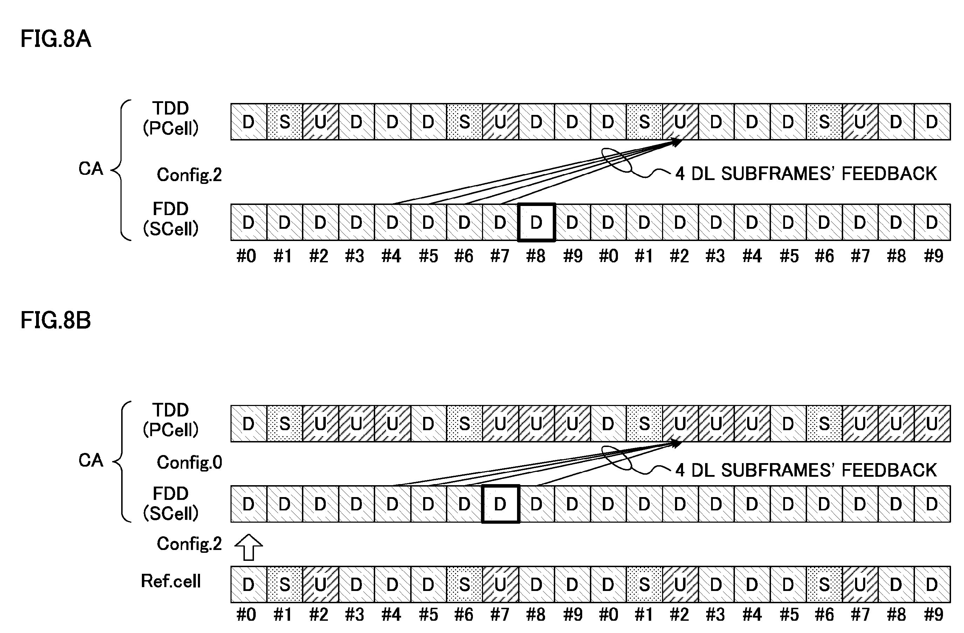

FIG. 8A shows a case where, when the new HARQ timing shown in above FIG. 6A is employed, the allocation of DL signals to part of the DL subframes (SF #8) among the FDD cell's DL subframes (SFs #4, #5, #6, #7 and #8) that can be allocated to a specific TDD UL subframe (SF #2) is limited. By this means, even when a new HARQ timing is employed, a user terminal can send A/N feedback by employing PUCCH format 1b with channel selection. Also, once the number of A/N bits (the number of DL subframes) that are detected exceeds a predetermined value (once SFs #4, #5, #6 and #7 are detected), the user terminal can stop DL signal detection in the rest of the DL subframes (SF #8).

Also, FIG. 8B shows a case where, when the new HARQ timing shown in above FIG. 6B is employed, the allocation of DL signals to part of the DL subframes (SF #7) among the FDD cell's DL subframes (SFs #4, #5, #6, #7 and #8) that can be allocated to a specific TDD UL subframe (SF #2) is limited.

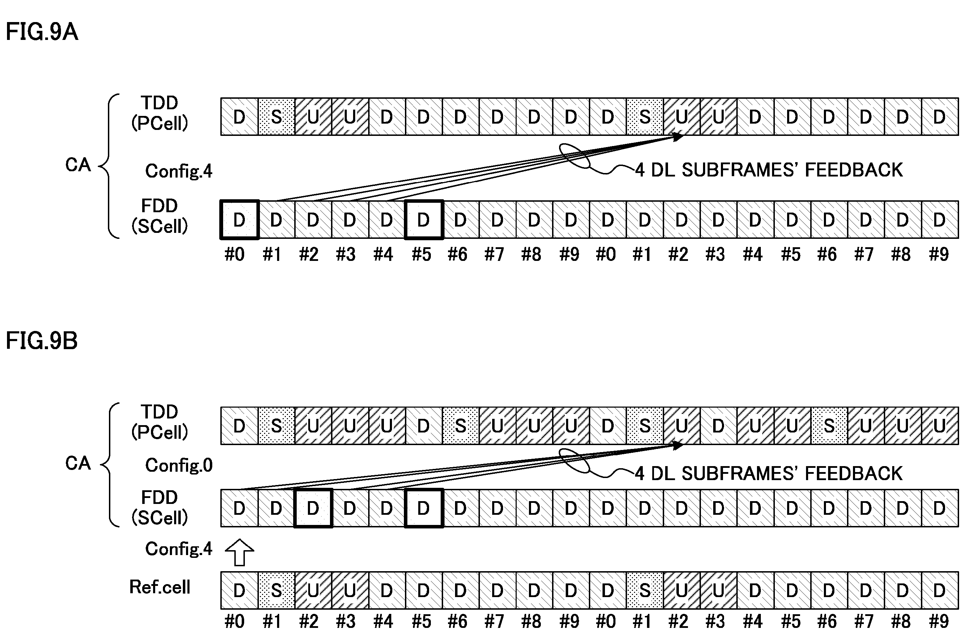

FIG. 9A shows a case where, when the new HARQ timing shown in above FIG. 7A is employed, the allocation of DL signals to part of the DL subframes (SFs #0 and #5) among the FDD cell's DL subframes (SFs #0, #1, #2, #3, #4 and #5) that can be allocated to a specific TDD UL subframe (SF #2) is limited. Also, FIG. 9B shows a case where, when the new HARQ timing shown in above FIG. 7B is employed, the allocation of DL signals to part of the DL subframes (SFs #2 and #5) among the FDD cell's DL subframes (SFs #0, #1, #2, #3, #4 and #5) that can be allocated to a specific TDD UL subframe (SF #2) is limited. Note that the limitation of DL signal allocation to the FDD cell's DL subframes may be controlled dynamically on a per user terminal basis.

In this way, as shown in FIGs. 8 and FIGs. 9, even when a new HARQ timing makes the number of DL subframes of the FDD cell that can be allocated to a specific TDD UL subframe greater than a predetermined value, the maximum number of DL signals to allocate to part of the DL subframes of the FDD cell is limited not to exceed the maximum number of DL signals to allocate according to the DL/UL configuration that serves as the basis of the new HARQ timing. By this means, even when a new HARQ timing is employed, it is possible to employ PUCCH format 1b with channel selection. Also, from the terminal's perspective, the same configurations as in the above-mentioned reference DL/UL configuration can be used in the buffer for received signals and so on, so that it is possible to implement this method with minimal additional configurations. Meanwhile, since it is possible to limit different subframes on a per terminal basis, dynamically, it is possible to carry out allocation to all DL subframes. In this way, it becomes possible to use all the DL subframes of the FDD cell without changing the mechanism and implementation of terminals significantly.

### <Base Station Operation/User Terminal Operation>

As mentioned earlier, with the present embodiment, in TDD-FDD CA to employ a new HARQ timing, the base stations control the scheduling of DL signals (PDSCH signals, DL assignments, etc.) so that the number of DL subframes of the FDD cell (the number of A/N bits) to be allocated to one TDD UL subframe does not exceed a predetermined value. Meanwhile, a user terminal detects the DL signals transmitted in DL subframes on the premise that the number of A/N bits (or the number of DL subframes) to allocate to one UL subframe does not exceed a predetermined value (presumably equal to or less than the predetermined value).

At this time, the base stations/user terminal can control the transmission/detection of DL signals by using the DAI (Downlink Assignment Index). The DAI is used as the counter of DL subframes in TDD employing A/N bundling, and included in downlink control information (DCI). Now, the DAI will be described.

For example, assume a case where DL data is transmitted to a user terminal in four consecutive subframes (SFs #0 to #3). In this case, if the user terminal fails to detect the DL assignment (PDCCH signal) of SF #1, the user terminal judges that DL data is transmitted in three subframes, namely SFs #0, #2 and #3. Consequently, when the user terminal executes A/N bundling in the subframe direction, the user terminal feeds back an ACK if these three subframes (SFs #0, #2 and #3) are OK (ACK). Also, even when PUCCH format 1b with channel selection is used, the terminal has to feedback three ACKs, and the base station is unable to decide which of the four subframes that have been allocated resulted in an error. In this way, if a detection failure occurs on the user terminal side, DL HARQ cannot be executed properly.

In order to solve this problem, TDD has heretofore provided support for a two-bit DAI in downlink control information (DCI). The DAI functions as a counter, and its value increases by one per DL assignment. That is, when the user terminal fails to detect a DL assignment in the middle, the DAI count value does not increase by one, so that the failed detection is brought to attention.

With the present embodiment, by configuring a DAI in the downlink control information (DCI) of DL signals that are transmitted in the FDD cell, so that it is possible to simplify the user terminal operation after the number of subframes allocated reaches a predetermined value.

For example, as shown in FIGs. 10, when the DAI reaches a predetermined value (the maximum number of DL signals to allocate in the reference DL/UL configuration for the new HARQ timing, and, for example, in the event of the DL/UL configuration 2, this maximum value is four), DL is not allocated in the next subframe of the FDD cell, so that the user terminal stops DL assignment detection in the DL signal transmitted in that subframe (SF #8) of the FDD cell. Then, the user terminal allocates the delivery acknowledgement signals for the DL signals transmitted in the FDD cell's DL subframes (SF #4, SF #5, SF #6 and SF #7), corresponding to each DAI value, to an uplink control channel in a specific UL subframe (SF #2) of the TDD cell. Note that if the DAI does not reach a predetermined value, the user terminal continues the DL assignment detection operation in all subframes of the FDD cell (SF #4, SF #5, SF #6, SF #7 and SF #8), including SF #8.

Also, when the number of DL subframes (SFs #4 to #8) of the FDD cell that can be allocated to a specific TDD UL subframe (SF #2) exceeds a predetermined value, once the DAI contained in the downlink control information in DL signals transmitted in the FDD cell reaches a predetermined value, the base station stops transmitting DL signals (for example, PDSCH signals, DL assignments, etc.) in the rest of the DL subframes (SF #8) of the FDD cell (see FIGs. 10).

Note that the base station/user terminal can control the transmission/detection of UL grants in DL subframes of the FDD cell (SF #8) where no DL signal (PDSCH signal, DL assignment, etc.) is allocated. For example, as shown in FIG. 10A, the user terminal stops detecting DL assignments, and, furthermore, quits detecting UL grants likewise. Also, the base station stops transmitting DL assignments, and, furthermore, quits transmitting UL grants likewise (option 1). In this case, the user terminal can save power by completely stopping the receiving/detection operations in the FDD cell.

Alternatively, as shown in FIG. 10B, the user terminal may stop detecting DL assignments, and, meanwhile, detect UL grants in DL signals transmitted in the FDD cell. Also, the base station may stop transmitting DL assignments, and, meanwhile, transmit UL grants in DL signals transmitted in the FDD cell (option 2). In this case, based on these UL grants, the user terminal can transmit uplink data (PUSCH signal) and so on in the PUSCH of UL subframes of the FDD cell, so that it is possible to improve the efficiency of the use of UL resources. Also, in these subframes, UL grants alone need to be detected and the DL assignment detection operation is unnecessary, so that it is possible to reduce the load upon terminals.

### <Variation>

Note that, although a case has been shown with the above description where, when the number of A/N bits to allocate to a UL subframe of the TDD cell exceeds a predetermined value, the DL signals to allocate to DL subframes of the SCell are limited, this is by no means limiting. For example, when the number of A/N bits to allocate to the PUCCH of a UL subframe of the TDD cell exceeds a predetermined value, it is equally possible to employ PUCCH format 3, instead of PUCCH format 1b with channel selection. In this case, even when DL signals are allocate to all the DL subframes of the FDD cell, it becomes possible to allocate and feed back A/N's in UL subframes of the TDD cell, without limiting the allocation of DL signals.

### (Second Example)

An A/N feedback method for 3 CCs or more in TDD-FDD CA will be described with a second example. Note that, a case will be described in the following description where the TDD cell is configured as the PCell (and the FDD cell is configured as an SCell), and A/N's for multiple CCs (TDD cell and FDD cell) are aggregated, allocated and sent by way of PUCCH transmission in an uplink control channel in a UL subframe of the TDD cell. Furthermore, a case will be described below in which a user terminal employs a new HARQ timing (the above method 3).

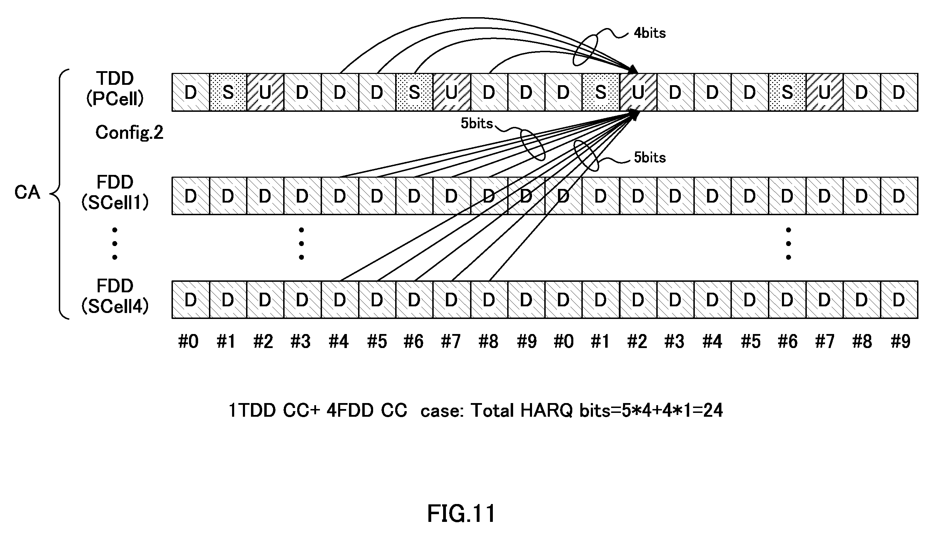

First, when CA is carried out in 3 CCs or more (for example, five CCs), cases might occur where the new HARQ timing that is employed makes the number of A/N bits to allocate a specific UL subframe of the TDD cell greater than twenty bits, and four such cases will be described below as examples (see FIG. 11 to FIG. 14). Note that in FIG. 11 to FIG. 14, UL subframes in the FDD cell are omitted, and DL subframes alone are shown.

### <Case 1>

FIG. 11 shows a case where, in CA among a TDD cell (PCell) to employ the DL/UL configuration 2 and FDD cells (SCells 1 to 4), a new HARQ timing that is based on the DL/UL configuration 2, which is employed in the TDD cell, is applied to the FDD cells. In this case, the number of DL subframes of the FDD cell of each CC to be allocated to an uplink control channel in a specific UL subframe (SF #2) of the TDD cell exceeds a predetermined value (for example, four) (here, in each SCell, the number of DL subframes is five). As a result of this, the number of A/N bits for the TDD cell and a plurality of FDD cells to multiplex in an uplink control channel in a specific UL subframe (SF #2) of the TDD cell exceeds a predetermined value (for example, twenty bits) (here, becomes twenty-four bits). In this case, it becomes not possible to employ PUCCH format 3.

### <Case 2>

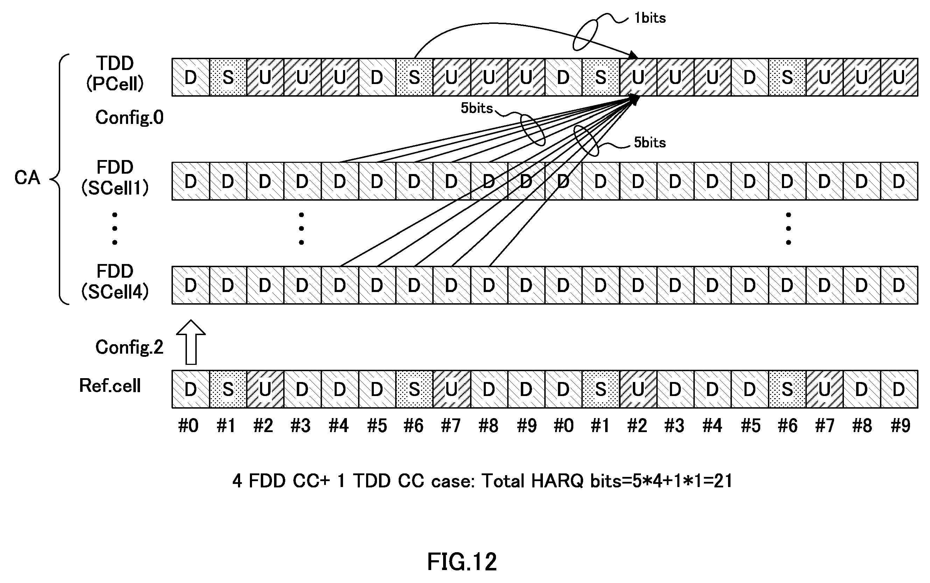

FIG. 12 shows a case where, in CA among a TDD cell (PCell) to employ the DL/UL configuration 0 and FDD cells (SCells 1 to 4), a new HARQ timing that is based on the DL/UL configuration 2, which is different from the DL/UL configuration of the TDD cell, is applied to the FDD cells. In this case, the number of DL subframes of the FDD cell of each CC to be allocated to an uplink control channel in a specific UL subframe (SF #2) of the TDD cell exceeds a predetermined value (here, in each SCell, the number of DL subframes is five). As a result of this, the number of A/N bits for the TDD cell and a plurality of FDD cells to multiplex in an uplink control channel in a specific UL subframe (SF #2) of the TDD cell exceeds a predetermined value (here, becomes twenty-one bits), and it becomes not possible to employ PUCCH format 3.

### <Case 3>

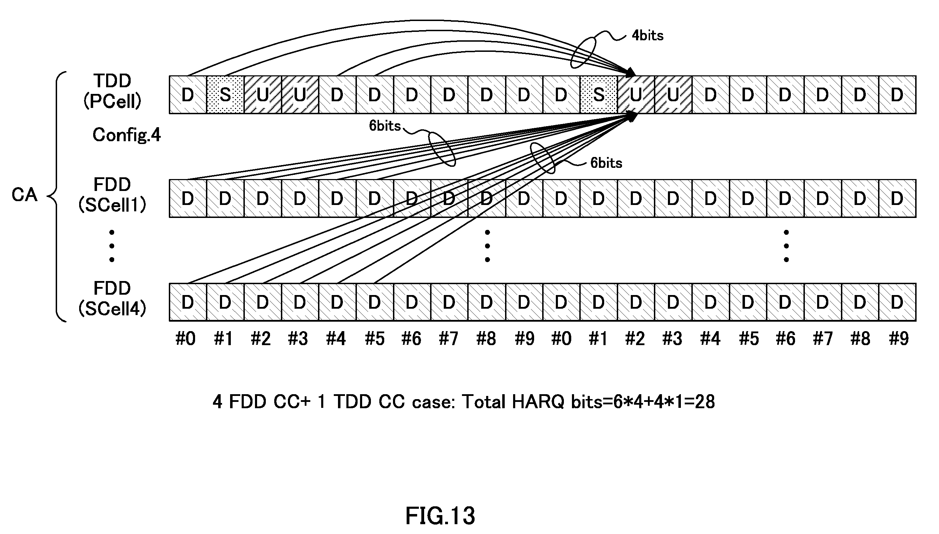

FIG. 13 shows a case where, in CA among a TDD cell (PCell) to employ the DL/UL configuration 4 and FDD cells (SCells 1 to 4), a new HARQ timing that is based on the DL/UL configuration 4, which is employed in the TDD cell, is applied to the FDD cells. In this case, the number of DL subframes of the FDD cell of each CC to be allocated to an uplink control channel in a specific UL subframe (SF #2) of the TDD cell exceeds a predetermined value (here, the number of DL subframes is six in each SCell). As a result of this, the number of A/N bits for the TDD cell and a plurality of FDD cells to multiplex in an uplink control channel in a specific UL subframe (SF #2) of the TDD cell exceeds a predetermined value (here, becomes twenty-eight bits), and it becomes not possible to employ PUCCH format 3.

### <Case 4>

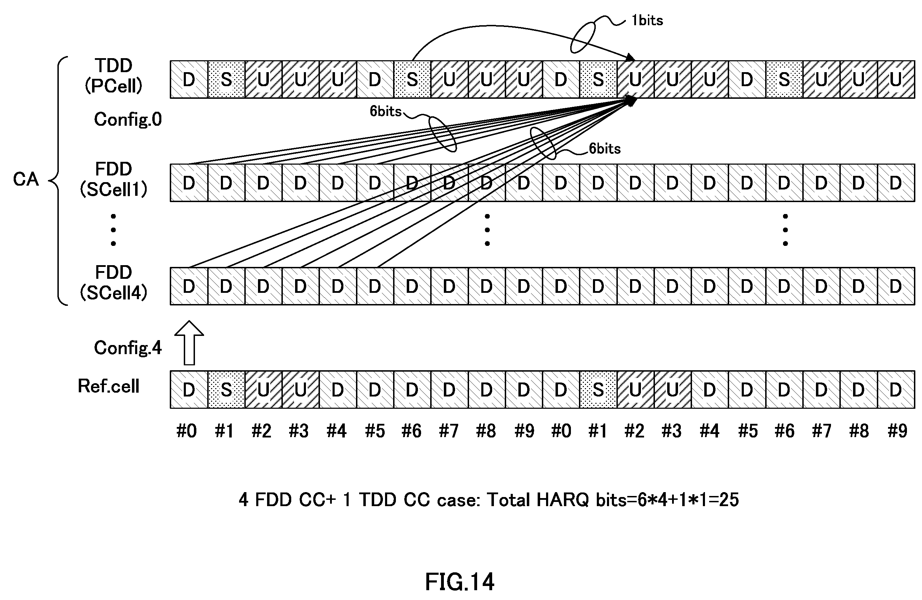

FIG. 14 show a case where, in CA among a TDD cell (PCell) to employ the DL/UL configuration 0 and FDD cells (SCells 1 to 4), a new HARQ timing that is based on the DL/UL configuration 4, which is different from the DL/UL configuration of the TDD cell, is applied to FDD cells. In this case, the number of DL subframes of the FDD cell of each CC to be allocated to an uplink control channel in a specific UL subframe (SF #2) of the TDD cell exceeds a predetermined value (here, the number of DL subframes is six in each SCell). As a result of this, the number of A/N bits for the TDD cell and a plurality of FDD cells to be allocated to an uplink control channel in a specific UL subframe (SF #2) of the TDD cell exceeds a predetermined value (here, becomes twenty-five bits), and it becomes not possible to employ PUCCH format 3.

Consequently, with the present embodiment, A/N's are allocated so that the number of A/N bits to be allocated to a UL subframe of the TDD cell does not exceed a predetermined value. To be more specific, a user terminal allocate A/N's so that the number of A/N bits to multiplex in an uplink control channel in a UL subframe of the TDD cell becomes a predetermined value or less.

For example, when the new HARQ timing makes the number of each cell's A/N bits (the number of DL subframes) that can be allocated to a specific TDD UL subframe greater than a predetermined value, the allocation of DL signals to part of the DL subframes among the FDD cell's DL subframes that can be allocated to this specific UL subframe is limited. For example, given a specific UL subframe, the DL signals to allocate to the DL subframes of the PCell (TDD cell) are reserved preferentially, and the scheduling of the DL signals to allocate to the DL subframes of a plurality of SCells (FDD cells) is controlled. Cases of applying the present embodiment to above case 1 to case 4 will be described below.

### <Case 1>

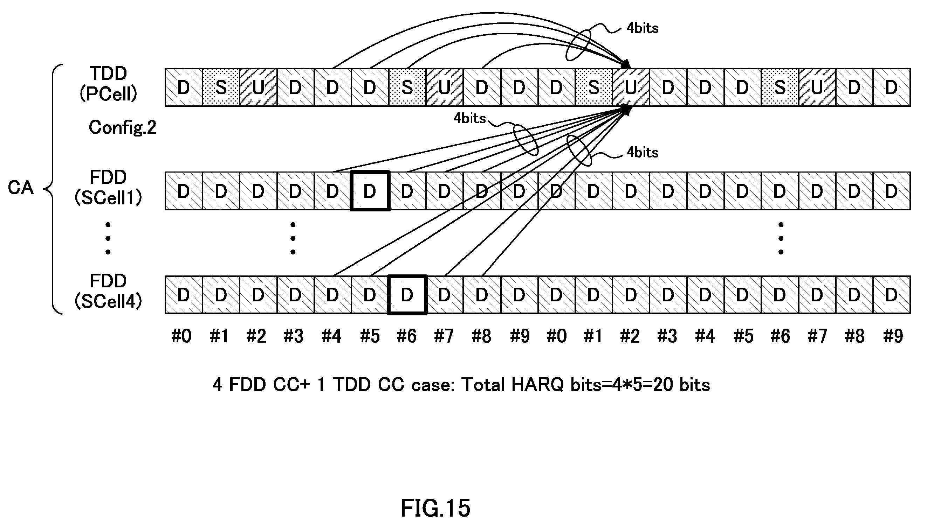

FIG. 15 shows a case where, when the new HARQ timing shown in above FIG. 11 is employed, the allocation of DL signals (PDSCH signals, DL assignments, etc.) to part of the DL subframes among the DL subframe (SFs #4, #5, #6, #7 and #8) of each SCell (FDD cell) that can be allocated to a specific TDD UL subframe (SF #2) is limited. Note that the DL subframes where the allocation of DL signals is limited can be controlled on a per CC basis. Here, a case is shown where the allocation of the DL data signal (PDSCH signal) of DL subframe 5 to SCell 1 is limited, and where the allocation of the DL data signal of DL subframe 6 to SCell 4 is limited. Note that the allocation of DL signals to each DL subframe is limited in other CCs as well. By this means, even when new HARQ timing is employed, a user terminal can send A/N feedback by employing PUCCH format 3.

### <Case 2>

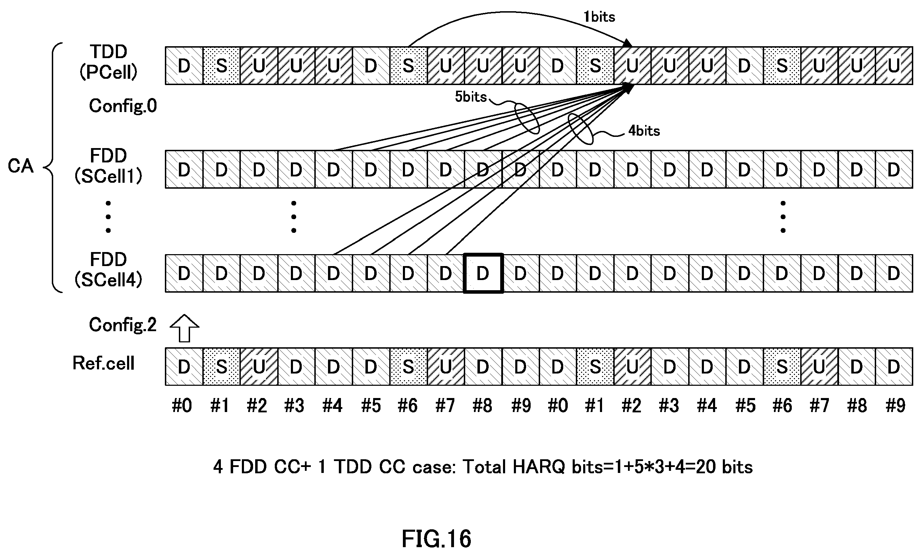

FIG. 16 shows a case where, when the new HARQ timing shown in above FIG. 12 is employed, the allocation of DL data signals to DL subframes of part of the cells among the DL subframes (SFs #4, #5, #6, #7 and #8) of each SCell (FDD cell) that can be allocated to a specific TDD UL subframe (SF #2) is limited. Here, the allocation of DL signals is not limited with respect to SCell 1 to SCell 3. On the other hand, the allocation of the DL signal of DL subframe 8 to SCell 4 is limited. That is, since the number of A/N bits in the TDD cell is one, the number of A/N bits in each SCell can be made greater than four bits, within a range the number of A/N bits of five CCs does not exceed twenty.

As for the order of priorities in the allocation of DL signals, the primary cell (TDD cell) is prioritized over the secondary cells (FDD cell). Also, if there are a plurality of secondary cells, DL signals can be allocated by prioritizing secondary cells to which lower index numbers are assigned. Note that, when part of the secondary cells are configured as TDD cells, DL signals can be allocated by prioritizing the TDD cells over the FDD cells. By so doing, it is possible to determine the order of priorities when limiting the allocation of DL, without introducing new higher layer signaling to indicate the order of priorities.

On the other hand, it is also possible to introduce new higher layer signaling to indicate the order of priorities in the allocation of DL signals. By so doing, the order in DL allocation can be designated apart from the primary-secondary relationship, which indicates the order of the priorities of the cells in CA, and the index numbers of the secondary cells. In environments where CA is carried out between a macro cell and a small cell, such as those shown in FIG. 1B and FIG. 1C, cases might occur where the cell having the wider band/higher capacity cell is always the primary cell, and, provided that the index numbers may not be necessarily low, cases might even occur where the newest secondary cell (that is, the one that is added the most recently) has the largest capacity. Consequently, by making it possible to configure the order of priorities in the allocation of DL signals differently from the order of the priorities of cells, more flexible CA operation becomes possible.

### <Case 3>

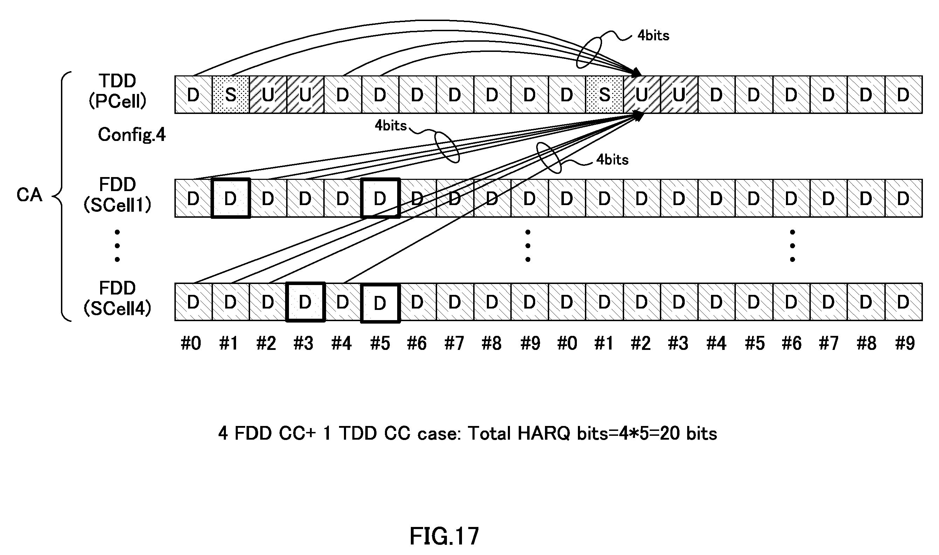

FIG. 17 shows a case where, when the new HARQ timing shown in above FIG. 13 is employed, the allocation of DL signals (PDSCH signals) to part of the DL subframes in a predetermined CC among the DL subframes (SFs #0, #1, #2, #3, #4 and #5) of each SCell (FDD cell) that can be allocated to a specific TDD UL subframe (SF #2) is limited. A case is shown here where the allocation of the DL signals (PDSCH signals) of DL subframes 1 and 5 to SCell 1 is limited, and where the allocation of the DL signals of DL subframes 3 and 5 to SCell 4 is limited. Note that the allocation of DL signals to each DL subframe is limited in other CCs as well. By this means, even when a new HARQ timing is employed, a user terminal can send A/N feedback by employing PUCCH format 3.

### <Case 4>

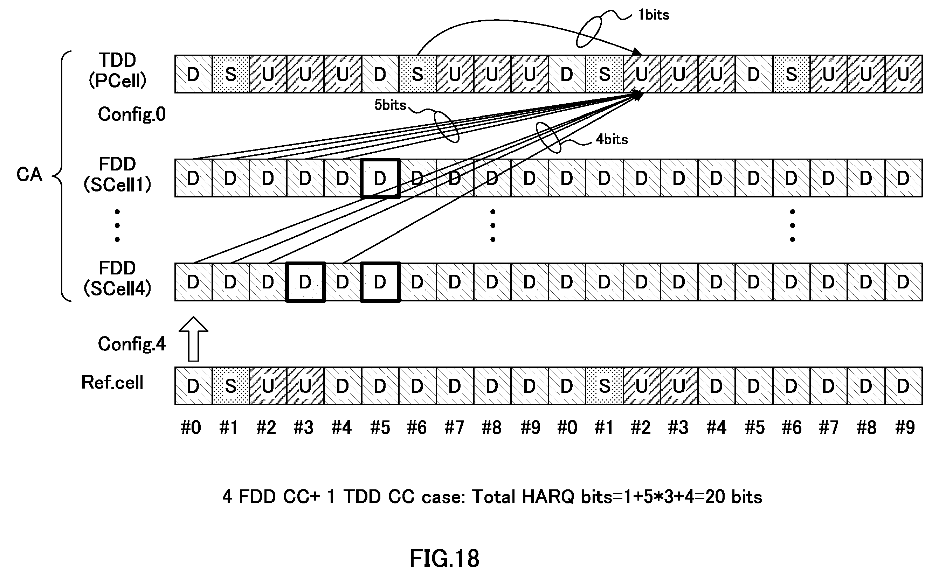

FIG. 18 shows a case where, when the new HARQ timing shown in above FIG. 14 is employed, the allocation of DL signals (PDSCH signals) to part of the DL subframes in a predetermined CC, among the DL subframes (SFs #0, #1, #2, #3, #4 and #5) of each SCell (FDD cell) that can be allocated to a specific TDD UL subframe (SF #2), is limited. Here, a case is shown where the allocation of the DL signal (PDSCH signal) of DL subframe 5 to SCell 1 to SCell 3 is limited. Meanwhile, a case is shown where the allocation of the DL signals (PDSCH signals) of DL subframes 3 and 5 to SCell 4 is limited. That is, since the number of A/N bits in the TDD cell is one, the number of A/N bits in each SCell can be made greater than four bits, within a range the number of A/N bits of five CCs does not exceed twenty. The order of priorities in the allocation of DL signals may be configured in the same way as in above case 2.

In this way, as shown in FIG. 15 to FIG. 18, even when new HARQ timings make the number of DL subframes of the FDD cell that can be allocated to a specific TDD UL subframe greater than a predetermined value, the allocation of DL signals to part of the DL subframes of the FDD cell is limited. By this means, even when a new HARQ timing is employed, it becomes possible to employ PUCCH format 3. Also, from the terminal's perspective, the same configurations as in the above-mentioned reference DL/UL configuration can be used in the buffer for received signals and so on, so that it is possible to implement this method with minimal additional configurations. Meanwhile, since it is possible to limit different subframes on a per terminal basis, dynamically, it is possible to carry out allocation to all DL subframes. In this way, it becomes possible to use all the DL subframes of the FDD cell without changing the mechanism and implementation of terminals significantly.

### <Base Station Operation/User Terminal Operation>

As mentioned earlier, with the present embodiment, in TDD-FDD CA to apply a new HARQ timing, the base stations control the scheduling of DL signals (PDSCH signals, DL assignments, etc.) so that the number of DL subframes of (the number of A/N bits) for multiple cells to be allocated to a TDD UL subframe does not exceed a predetermined value. Meanwhile, a user terminal detects the DL signals transmitted in DL subframes on the premise that the number of A/N bits (or the number of DL subframes) to allocate to that UL subframe does not exceed a predetermined value (presumably equal to or less than the predetermined value).

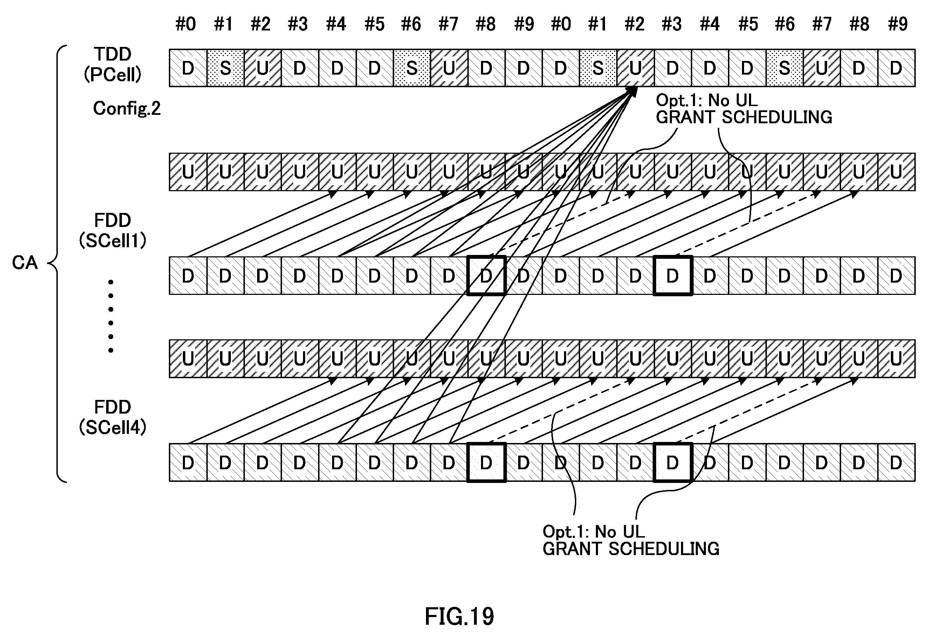

For example, assume a case where, as shown in FIG. 19, the number of A/N bits of a plurality of FDD cells to be allocated to a specific UL grant (SF #2) of the TDD cell (PCell) reaches a predetermined value (twenty bits). In this case, once the A/N's to feed back reaches 20 bits, a user terminal stops detecting DL assignments in DL signals transmitted in each FDD cell's subframe (here, SF #8). Then, A/N's in response to DL subframes, which stay within 20 bits, are fed back.

Also, when the number of DL subframes that can be allocated to a specific TDD UL subframe (SF #2) and the number of DL subframes of each FDD cell (SF #4 to SF #8) exceed a predetermined value, once the number of A/N bits reaches a predetermined value (twenty bits), the base station stops the transmission of DL signals (for example, PDSCH signals, DL assignments, etc.) to be transmitted in the rest of the DL subframes (SF #8) of the FDD cell (see FIG. 19). As for the order of priorities in the allocation of DL signals in the TDD cell and the FDD cell (or the order in DL signal allocation limitation), it is possible to use the method shown in above case 2.

Note that the base station/user terminal can control the transmission/detection of UL grants in DL subframes of the FDD cell (SF #8 and SF #3) where no DL signal (the PDSCH signal, DL assignment, etc.) is allocated. For example, as shown in FIG. 19, the user terminal stops detecting DL assignments, and, furthermore, quits detecting UL grants likewise. Also, the base station stops transmitting DL assignments, and, furthermore, quits transmitting UL grants likewise (option 1). In this case, the user terminal can save power by completely stopping the receiving/detection operations in the FDD cell.

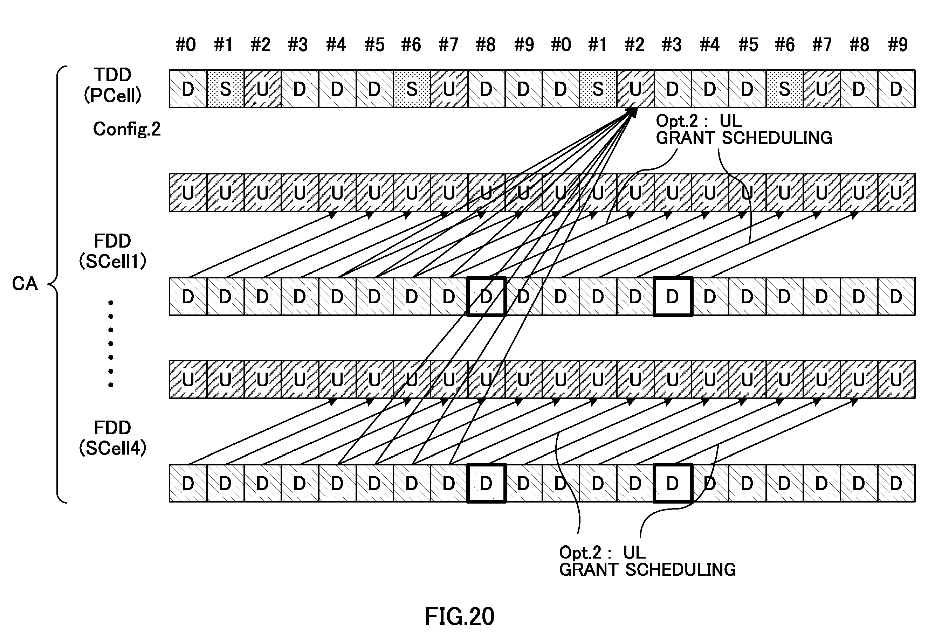

Alternatively, as shown in FIG. 20, the user terminal may stop detecting DL assignments, and, meanwhile, detect UL grants in DL signals transmitted in the FDD cell. Also, the base station may stop transmitting DL assignments, and, meanwhile, transmit UL grants in DL signals transmitted in the FDD cell (option 2). In this case, based on these UL grants, the user terminal can transmit uplink data (PUSCH signal) and so on in the PUSCH of UL subframes of the FDD cell, so that it is possible to improve the efficiency of the use of UL resources. Also, in these subframes, UL grants alone need to be detected and the DL assignment detection operation is unnecessary, so that it is possible to reduce the load upon terminals.

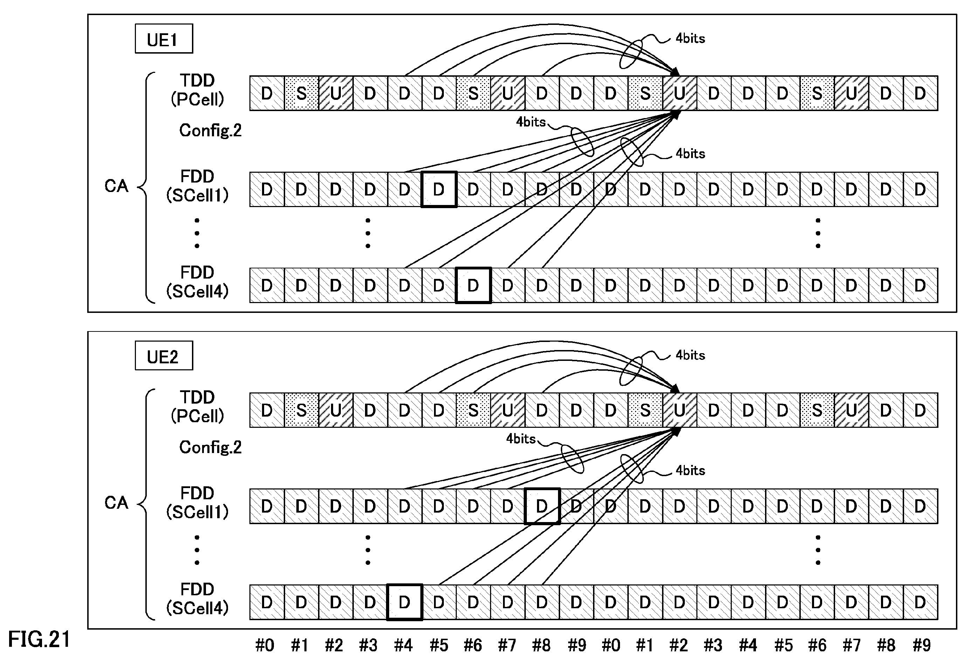

Also, as mentioned earlier, when limiting the allocation of DL signals, the base station can control (schedule) this on a per user terminal and/or CC basis. FIG. 21 shows an example case where the allocation of DL signals is controlled on a per CC basis with respect to a user terminal 1 and a user terminal 2. In FIG. 21, with respect to the user terminal 1, the transmission of the DL signals (PDSCH signals, DL assignments, etc.) of DL subframe 5 of SCell 1 and DL subframe 6 of SCell 4 is limited. Meanwhile, with respect to the user terminal 2, the transmission of the DL signals of DL subframe 8 of SCell 1 and DL subframe 4 of the SCell 4 is limited.

### (Structure of Radio Communication System)

Now, an example of a radio communication system according to the present embodiment will be described in detail below.

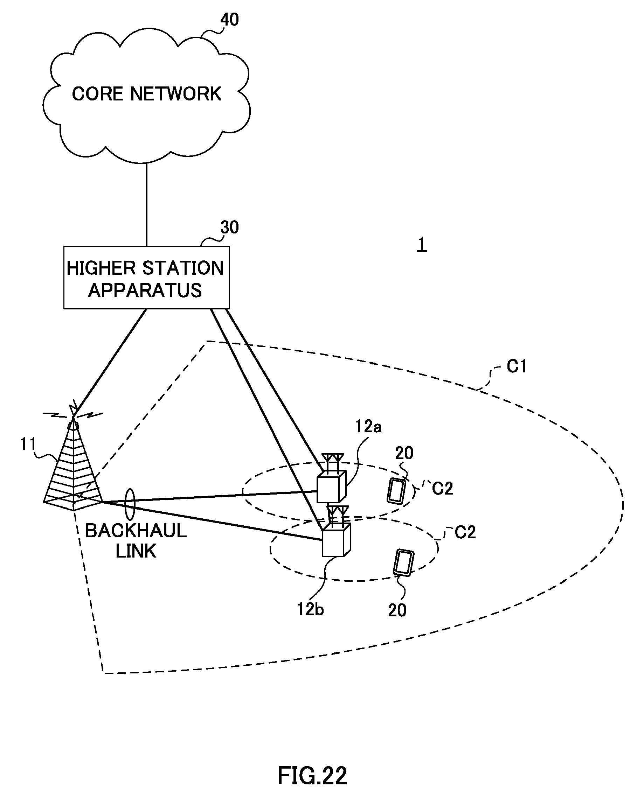

FIG. 22 is a schematic structure diagram of the radio communication system according to the present embodiment. Note that the radio communication system shown in FIG. 22 is a system to incorporate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G," "FRA (Future Radio Access)," etc.

The radio communication system 1 shown in FIG. 22 includes a radio base station 11 that forms a macro cell C1, and radio base stations 12a and 12b that form small cells C2, which are placed within the macro cell C1 and which are narrower than the macro cell C1. Also, user terminals 20 are placed in the macro cell C1 and in each small cell C2. The user terminals 20 can connect with both the radio base station 11 and the radio base stations 12 (dual connectivity). Also, intra-base station CA (intra-eNB CA) or inter-base station CA (inter-eNB CA) is applied between the radio base station 11 and the radio base stations 12. Furthermore, it is possible that one of the radio base station 11 and the radio base stations 12 employs FDD and the other one employs TDD.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz and so on) and a wide bandwidth may be used, or the same carrier as that used in the radio base station 11 may be used. A new carrier type (NCT) may be used as the carrier type between the user terminals 20 and the radio base stations 12. The connection between the radio base station 11 and the radio base stations 12 (or between the radio base stations 12) is implemented by wire connection (optical fiber, the X2 interface and so on) or by wireless connection.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "home eNodeBs," "micro base stations," "transmitting/receiving points" and so on. Hereinafter the radio base stations 11 and 12 will be collectively referred to as "radio base station 10," unless specified otherwise. The user terminals 20 are terminals to support various communication schemes such as LTE, LTE-A and so on, and may be both mobile communication terminals and stationary communication terminals.

In this radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands.

Now, communication channels used in the radio communication system shown in FIG. 22 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be transmitted by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, by means of the PUCCH, downlink radio quality information (CQI: Channel Quality Indicator), ACKs/NACKs and so on are communicated.

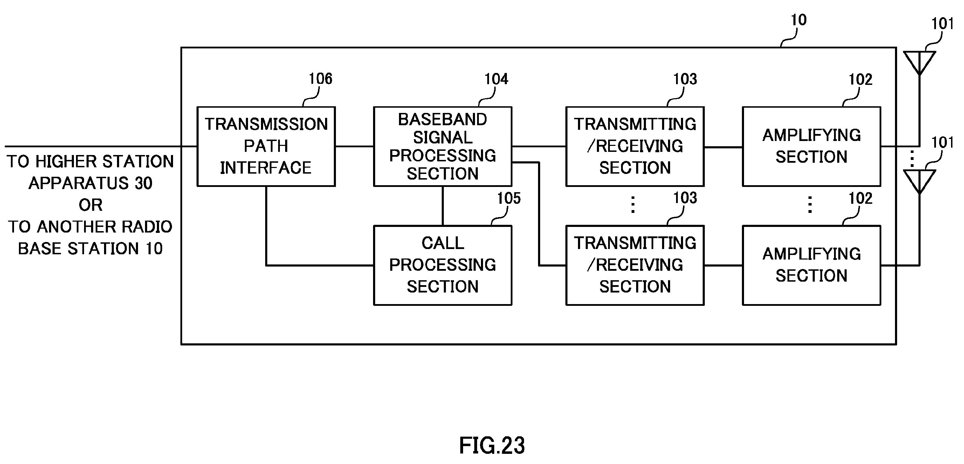

FIG. 23 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information for allowing communication in the cell, through higher layer signaling (RRC signaling, broadcast signal and so on). The information for allowing communication in the cell includes, for example, the uplink or downlink system bandwidth, feedback resource information and so on. Each transmitting/receiving section 103 converts baseband signals that are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

On the other hand, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

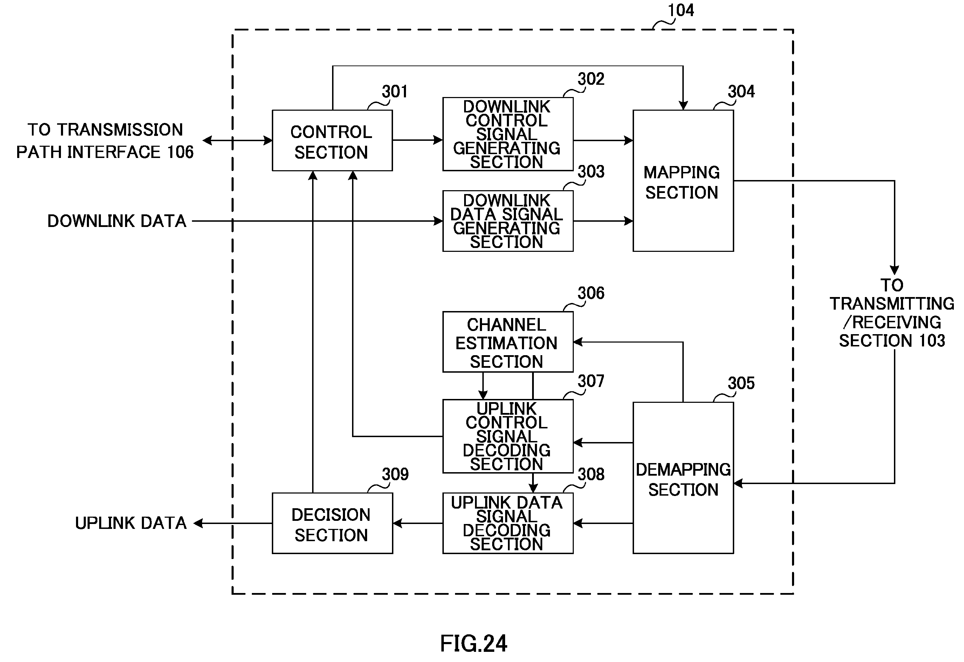

FIG. 24 is a diagram to show a principle functional structure of the baseband signal processing section 104 provided in the radio base station 10 according to the present embodiment. As shown in FIG. 24, the baseband signal processing section 104 provided in the radio base station 10 is comprised at least of a control section 301, a downlink control signal generating section 302, a downlink data signal generating section 303, a mapping section 304, a demapping section 305, a channel estimation section 306, an uplink control signal decoding section 307, an uplink data signal decoding section 308 and a decision section 309.

The control section 301 controls the scheduling of downlink user data transmitted in the PDSCH, downlink control information transmitted in the PDCCH and/or the enhanced PDCCH (EPDCCH), downlink reference signals and so on. Also, the control section 301 controls the scheduling of uplink data transmitted in the PUSCH, uplink control information transmitted in the PUCCH or the PUSCH, and uplink reference signals (allocation control). Information about the allocation control of uplink signals (uplink control signals and uplink user data) is reported to user terminals by using a downlink control signal (DCI).

To be more specific, the control section 301 controls the allocation of radio resources with respect to downlink signals and uplink signals, based on command information from the higher station apparatus 30, feedback information from each user terminal 20 and so on. That is, the control section 301 functions as a scheduler. Also, in inter-eNB CA, a control section 301 is provided for each of multiple CCs separately, and, in intra-eNB CA, a control section 301 is provided to be shared by multiple CCs.

Also, when the above-described new HARQ timings make the number of DL subframes of an FDD cell that can be allocated to a specific TDD UL subframe greater than a predetermined value, the control section 301 limits the allocation of DL signals to part of the DL subframes among the FDD cell's DL subframes that can be allocated to this specific TDD UL subframe. To be more specific, the control section 301 limits the allocation of DL assignments and PDSCH signals in predetermined DL subframes of a cell that is configured as an SCell (for example, an FDD cell) (see above FIGs. 8, FIGs. 9 and FIG. 15 to FIG. 20). Also, the control section 301 can control the transmission of DL signals by using the DAI (see above FIGs. 10). Also, the control section 301 can limit the allocation of PDSCH signals per user terminal and per CC (see above FIG. 21).

The downlink control signal generating section 302 generates downlink control signals (PDCCH signals and/or EPDCCH signals) that are determined to be allocated by the control section 301. To be more specific, based on commands from the control section 301, the downlink control signal generating section 302 generates DL assignments, which report downlink signal allocation information, and UL grants, which report uplink signal allocation information. For example, the downlink control signal generating section 302 limit the allocation of DL assignments to predetermined DL subframes based on commands from the control section 301. Also, the downlink control signal generating section 302 includes a DAI in an FDD cell's downlink control information (DCI) based on a command from the control section 301.

The downlink data signal generating section 303 generates downlink data signals (PDSCH signals). The data signals that are generated in the data signal generating section 303 are subjected to a coding process and a modulation process, based on coding rates and modulation schemes that are determined based on CSI from each user terminal 20 and so on.

Based on commands from the control section 301, the mapping section 304 controls the allocation of the downlink control signals generated in the downlink control signal generating section 302 and the downlink data signals generated in the downlink data signal generating section 303, to radio resources.

The demapping section 305 demaps uplink signals transmitted from the user terminals and separates the uplink signals. The channel estimation section 306 estimates channel states from the reference signals included in the received signals separated in the demapping section 305, and outputs the estimated channel states to the uplink control signal decoding section 307 and the uplink data signal decoding section 308.

The uplink control signal decoding section 307 decodes the feedback signals (delivery acknowledgement signals, etc.) transmitted from the user terminals through an uplink control channel (PUCCH), and outputs the results to the control section 301. The uplink data signal decoding section 308 decodes the uplink data signals transmitted from the user terminals through an uplink shared channel (PUSCH), and outputs the results to the decision section 309. The decision section 309 makes retransmission control decisions (ACKs/NACKs) based on the decoding results in the uplink data signal decoding section 308, and, furthermore, outputs the results to the control section 301.

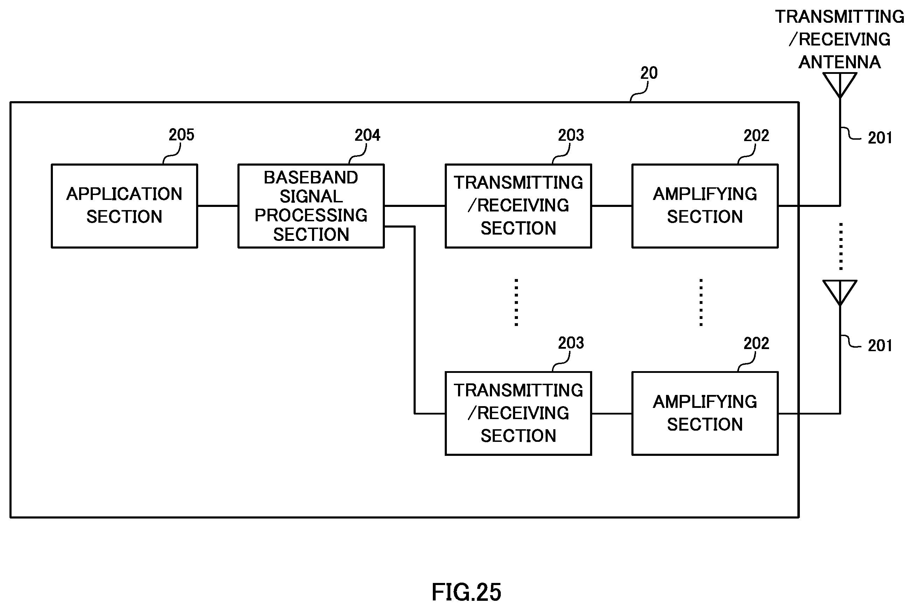

FIG. 25 is a diagram to show an overall structure of a user terminal 20 according to the present embodiment. A user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

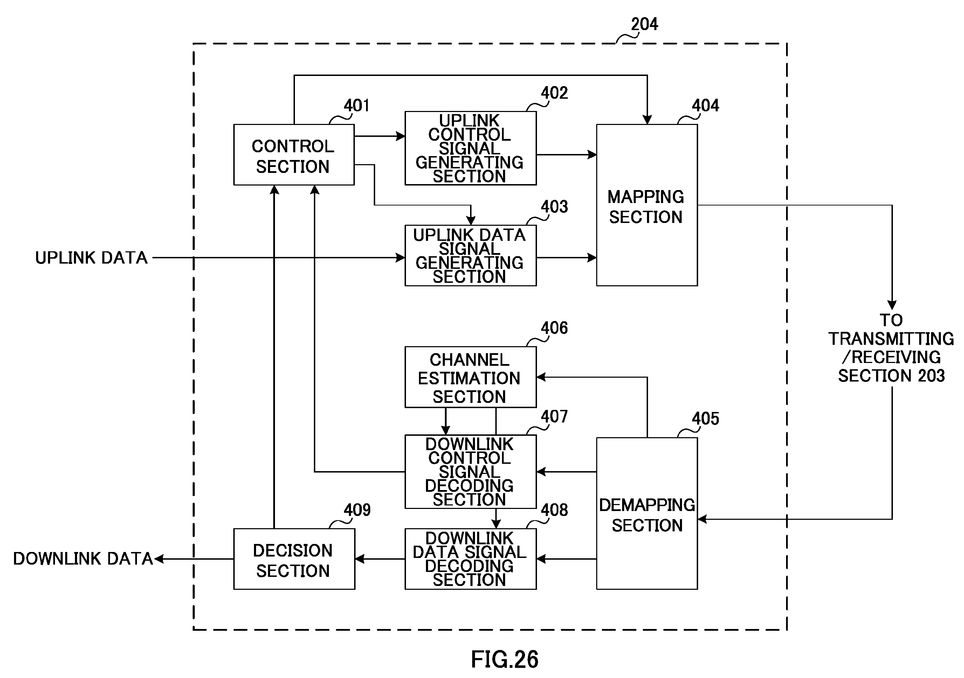

FIG. 26 is a diagram to show a principle functional structure of the baseband signal processing section 204 provided in the user terminal 20. As shown in FIG. 26, the baseband signal processing section 204 provided in the user terminal 20 is comprised at least of a control section 401 (feedback control section), an uplink control signal generating section 402, an uplink data signal generating section 403, a mapping section 404, a demapping section 405, a channel estimation section 406, a downlink control signal decoding section 407, a downlink data signal decoding section 408 and a decision section 409.

The control section 401 controls the generation of uplink control signals (feedback signals) and uplink data signals based on downlink the control signals (PDCCH signals) transmitted from the radio base station, retransmission control decisions with respect to the PDSCH signals received, and so on. The downlink control signals are output from the downlink control signal decoding section 408, and the retransmission control decisions are output from the decision section 409.

Furthermore, the control section 401 also functions as a feedback control section that controls the feedback of delivery acknowledgement signals (ACKs/NACKs) in response to PDSCH signals. To be more specific, in a communication system in which CA is employed, the control section 401 controls the selection of the cells (or the CCs) to feed back delivery acknowledgement signals to, the PUCCH resources to allocate delivery acknowledgement signals to, and so on.

For example, assuming TDD-FDD CA (in which the PCell employs TDD), when the control section 401 (feedback control section) aggregates and allocates A/N's for DL signals of each cell in an uplink control channel in a UL subframe of the TDD cell, the control section 401 employs a feedback mechanism that makes it possible to allocate A/N's to all the DL subframes of the FDD cell, and, furthermore, controls the allocation of A/N's depending on the number of A/N bits to multiplex in the uplink control channel of the UL subframe of the TDD cell. To be more specific, the control section 401 allocates delivery acknowledgement signals so that the number of A/N bits to multiplex in an uplink control channel in a UL subframe of the TDD cell become a predetermined value or less.

The uplink control signal generating section 402 generates uplink control signals (feedback signals such as delivery acknowledgement signals, channel state information (CSI) and so on) based on commands from the control section 401. Also, the uplink data signal generating section 403 generates uplink data signals based on commands from the control section 401. Note that, when a UL grant is contained in a downlink control signal reported from the radio base station, the control section 401 commands the uplink data signal 403 to generate an uplink data signal.

The mapping section 404 (allocation section) controls the allocation of uplink control signals (delivery acknowledgement signals, etc.) and uplink data signals to radio resources (PUCCH and PUSCH) based on commands from the control section 401. For example, depending on the CC (cell) that is subject to feedback (PUCCH transmission), the mapping section 404 allocates delivery acknowledgement signals to the PUCCH of that CC.

The demapping section 405 demaps downlink signals transmitted from the radio base station 10 and separates the downlink signals. The channel estimation section 407 estimates channel states from the reference signals included in the received signals separated in the demapping section 406, and outputs the estimated channel states to the downlink control signal decoding section 407 and the downlink data signal decoding section 408.

The downlink control signal decoding section 407 decodes the downlink control signals (PDCCH signal) transmitted in the downlink control channel (PDCCH), and outputs the scheduling information (information regarding the allocation to uplink resources) to the control section 401.

The downlink data signal decoding section 408 decodes the downlink data signals transmitted in the downlink shared channel (PDSCH), and outputs the results to the decision section 409. The decision section 409 makes retransmission control decisions (ACKs/NACKs) based on the decoding results in the downlink data signal decoding section 408, and, furthermore, outputs the results to the control section 401.

The decision section 409 can detect DL signals assuming that the number of DL subframes of the FDD cell to be allocated to a UL subframe of the TDD cell does not exceed a predetermined value. Also, when the number of DL subframes of the FDD cell to be allocated to a TDD UL subframe exceeds a predetermined value, the decision section 409 can stop detecting DL signals.

Also, by using the DAI contained in the downlink control information in DL signals transmitted in the FDD cell, the decision section 409 can control the detection of DL signals transmitted in each DL subframe of the FDD cell. For example, when the DAI reaches a predetermined value, the decision section 409 stops detecting DL assignments that are contained in DL signals transmitted in the FDD cell, and the control section 401 allocates the delivery acknowledgement signals for the DL signals transmitted in DL subframes corresponding to each DAI value, to an uplink control channel in a UL subframe of the TDD cell. At this time, the decision section 409 may stop detecting DL assignments, and furthermore, stop detecting DL assignments, or may stop detecting DL assignments, and, meanwhile, detect UL grants in DL signals transmitted in the FDD cell.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. For example, a plurality of embodiments and/or examples described above may be combined and implemented as appropriate. Furthermore, the examples described herein may be combined and implemented as appropriate.

The disclosure of Japanese Patent Application No. 2013-226623, filed on October 31, 2013, including the specification, drawings and abstract, is incorporated herein by reference in its entirety.

## Claims

1. A user terminal that communicates with an FDD cell and a TDD cell employing carrier aggregation, the user terminal comprising:
a receiving section that receives DL signals transmitted from each cell;
a decision section that detects the DL signals received, and makes retransmission control decisions; and
a feedback control section that allocates and feeds back delivery acknowledgement signals in response to each DL signal in a predetermined UL subframe,
wherein, when aggregating and allocating delivery acknowledgement signals for the DL signal of each cell in an uplink control channel in a UL subframe of the TDD cell, the feedback control section employs a feedback mechanism which makes it possible to allocate the delivery acknowledgement signals to all DL subframes of the FDD cell, and the decision section detects the DL signals assuming that a number of DL subframes of the FDD cell to be allocated to the UL subframe of the TDD cell does not exceed predetermined value.

2. The user terminal according to claim 1, wherein, when the feedback mechanism makes the number of DL subframes of the FDD cell that can be allocated to a specific TDD UL subframe greater than a predetermined value, allocation of DL signals to part of DL subframes among the DL subframes of the FDD cell that can be allocated to the specific TDD UL subframe is limited.

3. The user terminal according to claim 1 or claim 2, wherein, when the number of DL subframes of the FDD cell to be allocated to the TDD UL subframe exceeds a predetermined value, the decision section stops detecting the DL signals.

4. The user terminal according to claim 1 or claim 2, wherein the decision section controls the detection of the DL signals transmitted in each DL subframe of the FDD cell, by using a DAI contained in downlink control information transmitted in the FDD cell.

5. The user terminal according to claim 4, wherein, when the DAI reaches a predetermined value, the decision section stops detecting DL assignments transmitted in the FDD cell, and the feedback control section allocates delivery acknowledgement signals for DL signals transmitted in DL subframes corresponding to each DAI value, in the uplink control channel in the UL subframe of the TDD cell.

6. The user terminal according to claim 5, wherein the decision section stops detecting the DL assignments and, furthermore, stops detecting UL grants.

7. The user terminal according to claim 5, wherein the decision section stops detecting DL assignments, and, meanwhile, detects UL grants in the DL signals transmitted in the FDD cell.

8. A base station that communicates with a user terminal by executing carrier aggregation with another base station that uses a different duplex mode, the base station comprising:
a generating section that generates a DL signal;
a transmission section that allocates the DL signal to a DL subframe and transmits the DL subframe to the user terminal; and
a receiving section that receives a delivery acknowledgement signal transmitted from the user terminal via a UL subframe,
wherein, when the user terminal employs a feedback mechanism which makes it possible to allocate delivery acknowledgement signals for all DL subframes of the FDD cell, and, furthermore, aggregates and allocates delivery acknowledgement signals for the DL signal of each cell in an uplink control channel in a UL subframe of the TDD cell, the transmission section controls allocation of DL signals of the FDD cell so that a number of bits of delivery acknowledgement signals for DL signals of the FDD cell that can be allocated to each UL subframe of the TDD cell does not exceed a predetermined value.

9. The base station according to claim 8, wherein, when the number of DL subframes of the FDD cell that can be allocated to a specific TDD UL subframe becomes greater than a predetermined value, once a DAI that is contained in downlink control information transmitted in the FDD cell reaches a predetermined value, the transmission section stops transmitting DL assignments to be transmitted in rest of the DL subframes of the FDD cell.

10. A radio communication method for a user terminal that communicates with an FDD cell and a TDD cell employing carrier aggregation, the radio communication method comprising the steps of:
receiving DL signals transmitted from each cell;
detecting the DL signals received, and making retransmission control decisions; and
allocating and feeding back delivery acknowledgement signals in response to each DL signal in a predetermined UL subframe,
wherein, when delivery acknowledgement signals for the DL signal of each cell are aggregated and allocated in an uplink control channel in a UL subframe of the TDD cell, a feedback mechanism to make it possible to allocate the delivery acknowledgement signals to all DL subframes of the FDD cell is employed, and, furthermore, the DL signals are detected assuming that a number of DL subframes of the FDD cell to be allocated to the UL subframe of the TDD cell does not exceed predetermined value.
